# EUROPEAN PATENT SPECIFICATION

(11) **EP 4 231 134 B1**
(45) Date of publication and mention of the grant of the patent: **09.12.2026**
(21) Application number: 23155921.2
(22) Date of filing: 09.02.2023
(51) Int. Cl.: G06F 7/483, G06F 7/544

(54) **METHOD AND SYSTEM FOR CALCULATING DOT PRODUCTS**
VERFAHREN UND SYSTEM ZUR BERECHNUNG VON PUNKTPRODUKTEN
PROCÉDÉ ET SYSTÈME DE CALCUL DE PRODUITS SCALAIRES

(30) Priority: 17.02.2022 GB 202202126; 17.02.2022 GB 202202128
(43) Date of publication of application: 23.08.2023
(73) Proprietor: Imagination Technologies Limited, Kings Langley, Hertfordshire WD4 8LZ (GB)
(72) Inventor: Ferrere, Thomas, London (GB)
(74) Representative: Jacob, Anushya

(56) References cited:
- EP-A2- 3 719 639
- US-A1- 2018 300 105

## Description

### BACKGROUND

Most computing systems use number formats, typically in binary notation or base 2, for performing various computations. These number formats include fixed-point or floating-point number formats. Fixed point number formats can provide additional precision but is used to represent only a limited range of values. Therefore, floating point number formats are used in most of the modern computing systems to provide a trade-off between range and precision.

A floating-point number comprises a mantissa (*m*) having a bit length of 'b' bits, an exponent (*e*) having a bit length of 'a' bits and optionally a sign bit (*s*) to represent a binary number. In some widely used formats the exponent is biased (i.e. offset) by a value (*c*) so as to represent numbers smaller than 1 and is used to encode exceptional values at its end points. For non-extremal values of *e*, the floating-point number *x* is said to be normalized and the number x is represented as (-1)*^{s}*2*^{e-c}*(1 *+* 2*^{-b}m*). Thus, floating point numbers can be used to represent very small or very large numbers precisely using scientific notation, in binary or in some other base. The use of floating-point numbers in arithmetic computations provides varying degrees of precision depending on the bit length or type of floating-point format used.

Computations involving convolution/dot products of large arrays of real valued numbers occur commonly in the solution of various numerical problems. The dot product of large arrays or two sets of numbers (a₀, a₁, a₂... aₖ₋₁) and (b₀, b₁, b₂... bₖ₋₁) is defined as $a . b = {\sum }_{i = 0}^{k - 1} {a}_{i} {b}_{i}$

It is therefore advantageous to have hardware dedicated to performing dot products in high performance computing systems, graphic processing systems, neural network accelerators and the like. Conventionally, there are different ways to achieve this, with different benefits and drawbacks.

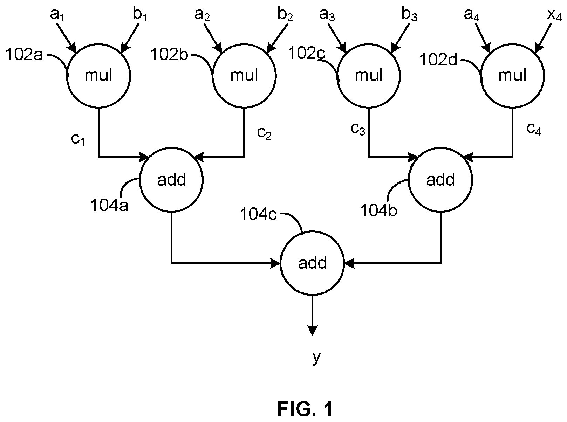

A known method in computing systems, to do dot product of two arrays/ sets of floating-point numbers, is by using separate floating point multiplication and floating point addition. A dot product unit 100 using this principle is shown in FIG.1. The dot product unit 100 comprises a set of floating point multiplication units 102a, 102b, 102c and 102d, and a set of floating point adder units 104a, 104b and 104c. The dot product unit 100 is implemented as a tree of floating point multiplication units and addition units. The dot product unit 100 receives a first set of floating point numbers (a₁, a₂, a₃,and a₄) and a second set of floating point numbers (b₁, b₂, b₃,and b₄) as inputs. Consider that each number in the first set of floating point numbers aᵢ comprises a mantissa maᵢ and an exponent eaᵢ. Similarly, each number in the second set of floating point numbers bᵢ comprises a mantissa mbᵢ and an exponent ebᵢ. Each floating point number aᵢ in the first set of floating-point numbers is provided as a first input to a respective one of floating point multiplication units 102a, 102b, 102c and 102d. Each floating point number bᵢ in a second set of floating-point numbers is provided as a second input to a respective one of floating point multiplication units 102a, 102b, 102c and 102d. Each floating point multiplication unit 102a, 102b, 102c and 102d performs the multiplication of floating point numbers aᵢ and bᵢ, to obtain a product cᵢ. Once the product cᵢ from each multiplication unit 102a, 102b, 102c and 102d is obtained, the results (floating point numbers) are accumulated by a series of adders in any dynamically or statically chosen order to obtain the output. Thus, the adders can be arranged in any order. In one example, as depicted in the FIG.1 the product c₁ and c₂ from two consecutive floating point multiplication units 102a and 102b are provided to a first floating point adder unit 104a to add the products (c₁ and c₂). Similarly, the products c₃ and c₄ from the next two consecutive floating point multiplication units 102c and 102d are provided to a second floating point adder unit 104b to add the product (c₃ and c₄). Further, the accumulated values are further provided as an input to a third floating point adder 104c to be accumulated to obtain the output y. The output from the multiplier or adder in each step is rounded, which causes a rounding error in the output generated by each step. The rounding error is a characteristic feature of floating-point calculations.

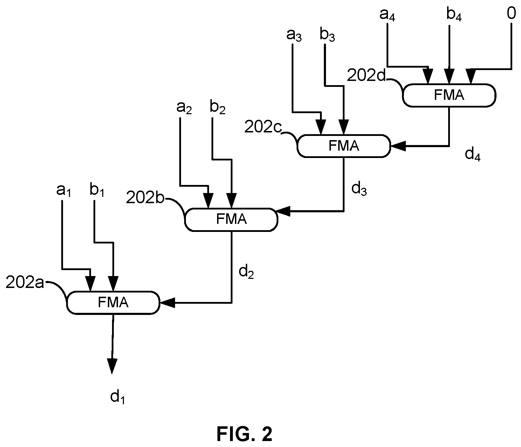

Another known method in computing systems, to do dot product of two arrays/ sets of floating-point numbers, is by using fused multiplication and addition operations. A dot product unit 200 using this principle is shown in FIG. 2. The dot product unit 200 comprises a set of Fused Multiply and Add (FMA) units 202a, 202b, 202c and 202d. An FMA unit performs the floating point multiplication and addition in a single step with a single rounding. Thus, FMA improves the speed and accuracy of computation of dot product involving accumulation of products. In FIG. 2, the results of one fused multiply add unit is provided as an input to another fused multiply add unit such that the product of two numbers is added to the product of the next two numbers. The dot product unit 200 receives both sets of floating point numbers aᵢ and bᵢ as inputs. Each floating point number aᵢ in the first set of floating-point numbers is provided as a first input to a respective one of FMA units 202a, 202b, 202c and 202d. Each floating point number bᵢ in the second set of floating-point numbers is provided as a second input to a respective one of FMA units 202a, 202b, 202c and 202d. Each FMA 202a, 202b and 202c computes multiplication of numbers aᵢ and bᵢ and adds it with the results of a previous FMA with a single rounding (N.B. in the case of FMA 202d there is no 'previous' FMA, as FMA 202d is at the top of tree, and so the addition operation simply adds the result of the multiplication operation to zero). For example, as depicted in FIG.2 the FMA 202d receives the numbers a₄ and b₄ as the multiplicand inputs. Further a 0 input is provided as a third input. The FMA 202d multiplies a₄ and b₄ and adds the result with 0 to obtain the output d₄. Further, the FMA 202c receives the numbers a₃ and b₃ as the multiplicand inputs and d₄ as a third input. The FMA 202c multiplies a₃ and b₃ and adds the result with d₄ to obtain the output d₃. Similarly, FMA 202b obtains the output d₃ by multiplying a₂ and b₂ and adding the result with d₃. Further the FMA 202a obtains the final output y=d₁ by multiplying a₁ and b₁ and adding the result with d₂.

Thus, pairs of floating-point number aᵢ and bᵢ from both sets of floating point numbers are multiplied together and added to a previously calculated output to generate a new or cumulative output. In other words, the overall sum is performed as a sequence of multiplication and addition of numbers. A final output (y) generated after multiplying and adding all the floating-point numbers in the array is provided as the output.

Either of the above described methods can be implemented iteratively looping through the same unit(s) or concurrently by using a parallel or sequential composition of units. Whether using the first dot product unit 100 or 200, the precision of the output cannot be guaranteed as different ordering of inputs may yield different results, due to the intermediate rounding operations. Further, there is a high delay introduced due to the number of logic gates in the critical path.

Hence, existing methods and architectures for processing floating-point numbers have drawbacks.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of performing dot product of an array of '2k' floating point numbers comprising two sets of k floating-point numbers aᵢ and bᵢ is disclosed. The method includes receiving both sets of 'k' floating point numbers and multiplying each floating point number aᵢ with a floating point number bᵢ to generate k product numbers (zᵢ), each product number (zᵢ) having a bit length of 'r+ log (k-1) +1' bits. The method further comprises creating a set of 'k' numbers (yᵢ) based on the k product numbers (zᵢ), the numbers (yᵢ) having a bit-length of 'n' bits. Further the method includes identifying a maximum exponent sum (eₘₐₓ) among k exponent sums (eabᵢ) of each pair of floating point numbers aᵢ and bᵢ, aligning the magnitude bits of the numbers (yᵢ) based on the maximum exponent sum (eₘₐₓ) and adding the set of 'k' numbers concurrently to obtain the dot product.

According to a first aspect there is provided a method of performing dot product of an array of '2k' floating point numbers, k ≥ 3, using a hardware implementation, as claimed in claim 1.

Optionally, each number in the first set of k floating-point numbers a₀, a₁..., aₖ₋₁ comprises a mantissa (maᵢ) and an exponent (eaᵢ) and each number in the second set of k floating-point numbers b₀, b₁..., bₖ₋₁ comprises a mantissa (mbᵢ) and an exponent (ebᵢ), where each mantissa (maᵢ) is having a bit length of 'p' bits and each mantissa (mbᵢ) is having a bit length of 'q' bits.

Optionally, performing multiplication comprises multiplying mantissa (maᵢ) and mantissa (mbᵢ) to obtain an intermediate mantissa product (mabᵢ).

Optionally, the method of performing a dot product emulates the precision obtained using separate multiplication and addition units for performing dot product having an output mantissa bit length of P bits by setting the value of 'r' bits as 'r= P+1-log(k-1)'.

Optionally, generating k product numbers (zᵢ) having the bit length of 'r+ log (k-1) +1' bits comprises: rounding, the bits of the intermediate mantissa product (mabᵢ) to r+ log (k-1) +1 bits, if p+q+2>r+ log (k-1) +1 bits; or padding, extra least-significant bits to the bit length of the intermediate mantissa product (mabᵢ) to generate r+ log (k-1) +1 bits, if p+q+2 < r+ log (k-1) +1 bits.

Optionally, identifying a maximum exponent sum (eₘₐₓ) includes identifying the maximum value among k exponent sums (eabᵢ) where k exponent sums (eabᵢ) is obtained by summing exponent (eaᵢ) and exponent (ebᵢ).

Optionally, adding extra most-significant bits to the bit length 'r+ log (k-1) +1' of the product numbers (zᵢ) comprises adding at least $\left⌈{log}_{2}\left(k\right)\right⌉$ number of the most-significant bits.

Optionally, adding at least extra most-significant bits to the bit length of the product numbers (zi) further comprises adding one or more least-significant bits to the bit length of the product numbers (zᵢ).

Optionally, the method further comprises: calculating an output value by processing 'k' numbers (yᵢ); renormalizing the output value; and rounding the output value to represent the output value as a floating-point number.

Optionally, aligning the magnitude bits of the numbers (yᵢ) to be based on the maximum exponent (eₘₐₓ) comprises the steps of, for each floating-point number (i): calculating the difference (e_{d}) between the maximum exponent sum (eₘₐₓ) and each exponent sum (eabᵢ); and shifting the magnitude bits of the corresponding number (yᵢ), to the LSB side, based on the calculated difference (e_{d}).

Optionally, further to shifting the magnitude bits of the numbers, the method further comprises performing rounding or truncating the bits of the numbers that are shifted outside the bit-length of the number.

Optionally, the method further comprises determining a two's complement of the magnitude bits of the numbers, based on a sign bit (sᵢ) of each corresponding number, if the set of 'k' floating point numbers comprises signed floating-point numbers.

According to a second aspect there is provided a hardware implementation for performing dot product of an array of '2k' floating point numbers, k ≥ 3as claimed in claim 10.

Optionally, the hardware implementation further comprises a renormalizing unit configured to: renormalize the output value; and round the output value to represent the output value as a floating-point number.

Optionally, each number in the first set of k floating-point numbers a₀, a₁..., aₖ₋₁ comprises a mantissa (maᵢ) and an exponent (eaᵢ) and each number in the second set of k floating-point numbers b₀, b₁..., bₖ₋₁ comprises a mantissa (mbᵢ) and an exponent (ebᵢ), where each mantissa (maᵢ) is having a bit length of 'p' bits and each mantissa (mbᵢ) is having a bit length of 'q' bits.

Optionally, the multiplication unit comprises a plurality of multiplier units configured to multiply concurrently each mantissa (maᵢ) with corresponding mantissa (mbᵢ) to obtain an intermediate mantissa product (mabᵢ).

Optionally, the hardware implementation for performing a dot product operation emulates the precision obtained using separate multiplication and addition units, for performing dot product having an output mantissa bit length of P bits, by setting the value of 'r' bits as 'r=P+1-log(k-1)'.

Optionally, the multiplication unit is configured to generate k product number (zᵢ) having the bit length of 'r+ log (k-1) +1' bits by: rounding, the bits of the intermediate mantissa product (mabᵢ) to r+ log (k-1) +1 bits, if p+q+2>r+ log (k-1) +1 bits; or padding, extra least-significant bits to the bit length of the intermediate mantissa product (mabᵢ) to generate r+ log (k-1) +1 bits, if p+q+2 < r+ log (k-1) +1 bits.

Optionally, the maximum exponent detection unit is configured to identify a maximum exponent sum (eₘₐₓ) among k exponent sums (eabᵢ), where k exponent sums (eabᵢ) is obtained by summing exponent (eaᵢ) and exponent (ebᵢ).

Optionally, the alignment unit is configured to align the magnitude bits of the numbers to be based on the maximum exponent (eₘₐₓ), wherein the alignment unit comprises: a plurality of subtraction units, wherein each subtraction unit is configured to calculate the difference (e_{d}) between the maximum exponent sum (eₘₐₓ) and exponent sum (eabᵢ); and a plurality of shifter units, each shifter unit configured to shift the magnitude bits of the corresponding number, to the LSB side, based on the calculated difference (e_{d}).

Optionally, the alignment unit is configured to further truncate the bits of the numbers that are shifted outside of the bit length of the numbers.

Optionally, the alignment unit further comprises a plurality of complementing units configured to determine two's complement of the magnitude bits of each number, based on a sign bit (sᵢ) of the corresponding number, if the set of 'k' floating point numbers comprises signed floating point numbers.

According to a third aspect there is provided a method of performing dot product of an array of '2k' floating point numbers, k ≥ 3, using a hardware implementation as claimed in claim 12.

According to a fourth aspect there is provided a hardware implementation for performing dot product of an array of '2k' floating point numbers, k ≥ 3, as claimed in claim 13.

The hardware implementation hardware implementation for performing dot product according to the first aspect discussed above may be embodied in hardware on an integrated circuit. There may be provided a method of manufacturing, at an integrated circuit manufacturing system, a hardware implementation for performing dot product. There may be provided an integrated circuit definition dataset that, when processed in an integrated circuit manufacturing system, configures the system to manufacture a hardware implementation for performing dot product. There may be provided a non-transitory computer readable storage medium having stored thereon a computer readable description of a hardware implementation for performing dot product that, when processed in an integrated circuit manufacturing system, causes the integrated circuit manufacturing system to manufacture an integrated circuit embodying a hardware implementation for performing dot product.

There may be provided an integrated circuit manufacturing system comprising: a non-transitory computer readable storage medium having stored thereon a computer readable description of the a hardware implementation for performing dot product according to the first aspect discussed above.; a layout processing system configured to process the computer readable description so as to generate a circuit layout description of an integrated circuit embodying the hardware implementation for performing dot product; and an integrated circuit generation system configured to manufacture the hardware implementation for performing dot product according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a block diagram illustrating a conventional floating point dot product calculator having separate multiplication and addition units;
FIG. 2 is a schematic block diagram illustrating another conventional floating point dot product calculator having fused multiplication and addition units;
FIG. 3 is a block diagram illustrating an example of a hardware implementation for performing dot product operation;
FIG. 4a is a block diagram illustrating a mantissa for a floating-point number in an incoming format representation;
FIG. 4b is a block diagram illustrating a product number in a first intermediate format representation;
FIG. 4c is a block diagram illustrating a second intermediate format representation of a signed number;
FIG. 5 is a block diagram illustrating the different units in the hardware implementation for performing dot product explained in FIG. 3;
FIG. 6a to FIG. 6d illustrate an example of a floating-point number converted from a first format representation to a second format representation;
FIG. 7 is a flowchart illustrating a method of performing dot product of two sets of k floating-point numbers;
FIG 8 is a graph illustrating a comparison of the implementation of the architecture 300 with other standard architectures for processing a set of floating-point numbers;
FIG. 9 shows a computer system in which a dot product calculator is implemented;
FIG. 10 shows an integrated circuit manufacturing system for generating an integrated circuit embodying a dot product calculator; and
FIG. 11 illustrates the architecture 300 implementing a carry-save multiplication.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As explained above, the conventional hardware for performing a dot product of two sets of numbers includes hardware implementing separate multiplication and addition units or one implementing fused multiplication and addition units. The multiplicands aᵢ and bᵢ from both sets of floating point numbers may be represented in an incoming format F comprising a mantissa and an exponent. The mantissa maᵢ and mbᵢ each comprise a bit length of p bits when represented in the incoming format F. The output of the multiplication unit may have a floating point number format F'. The format F' need not be the same as format F, and may have a mantissa width large enough to hold the exact multiplication output - for example the mantissa product (cᵢ) may be twice as large as the mantissa bit length of the multiplicands aᵢ and bᵢ. In some cases, the multiplicands aᵢ and bᵢ may be represented in different formats such that the mantissas of aᵢ and bᵢ may have different bit lengths. In such cases, the multiplication output may have a floating point format F' where the mantissa product is the sum of the mantissa bitlength of aᵢ and the mantissa bit length of bᵢ.

Irrespective of whether the input sets have the same mantissa lengths, when the mantissa of the product cᵢ has a bit length at least as long as the sum of the bit lengths of the mantissas of the multiplicands aᵢ and bᵢ, the dot product unit 100 using separate multiplication and addition described in FIG.1 has the same precision as the dot product unit 200 using fused multiplication and addition units, assuming no overflow or underflow, because there is no rounding required. However, if the second format F' is not wide enough to hold the exact multiplication output then performing dot product using the dot product unit 200 implementing fused multiplication and addition unit is more precise.

Whether using fused multiplication and addition or separately performing multiplication and addition, different orderings of the input pairs as multiplicands may yield different results. This is because of the effect of certain phenomenon such as catastrophic cancellation occurring when accumulating values in floating-point numbers.

Some arrangements of floating point adders providing faster computation include arrangements for performing parallel summation. These can also be used to reduce the latency of the network. For example, Fig. 1 shows a particular implementation of a network of floating point adders taking the outputs of the multiplication units 102a, 102b, 102c and 102d. The illustrated network of floating point adders in Fig. 1 is a balanced tree (or a balanced tree adder), for performing parallel summation and aimed at reducing latency. With such a configuration, addition of 'n' floating-point numbers (i.e. in Fig 1, the multiplication outputs cᵢ) can be realized using $\left⌈{log}_{2}\left(n\right)\right⌉$ stages.

Further, in generalized examples the tree adder need not be a balanced structure. The tree adder can instead add the floating-point numbers using a single adder at every different stage. For example, any two floating point numbers are added in a first stage to generate a first sum value. Further, the first sum value is added to another floating-point number in a second stage using a second adder to generate a second sum value and so on. The latency of the arrangement increases in this example compared to a balanced tree adder.

Consider the mantissa products L, -L, M and N are provided as an input to the adder unit either as the outputs of the multiplication units when using the dot product unit 100 using separate multiplication and addition units described in FIG.1 or as intermediate multiplication values when using the dot product unit 200 implementing fused multiplication and addition units. When performing the addition, in all these examples, in each stage the output values of the accumulation are rounded or truncated in order to fit the output value into its finite representation. Multiple rounding may result in catastrophic cancellations. For different orders in which each input is provided to a tree adder, different outputs are generated. A catastrophic cancellation can occur when very small numbers are added to very large ones, and may cause significant bits of the result to be lost due to rounding. E.g., when summing a large positive number, L, the corresponding negative number, -L, and two small positive numbers M and N, the precise value of the sum is (M+N). An arrangement of floating point additions summing L and -L in a first primary adder and M and N in a second primary adder ought to give the final result (M+N). However, if the inputs are ordered differently and the primary adders perform the sums (L+M) and (-L+N), and L is much larger than M and N, then the outputs of the primary adders could be rounded to L and -L, giving an overall output of 0. Similar effects can be observed when using a network of fused multiplication and addition units.

As discussed above, the existing methods of processing floating point numbers, such as performing dot product using separate multiplication and addition units as described in FIG.1 or using fused multiplication and addition units as described in FIG.2 generate output values of varying precision based on the order in which the numbers are provided as the input. That is, a certain order of providing the inputs generates the best result which is the closest approximation to the actual dot product of the numbers. Other orders of providing the inputs may generate results which are not so close to the actual dot product of the numbers. Thus, based on the order in which the inputs are provided, there could be a range of results obtained, around the actual dot product of the floating-point numbers.

The varying precision of the results obtained is due to reasons such as truncation errors or rounding errors, and catastrophic cancellation as discussed earlier. Also, the delay in obtaining the dot product for a large array of numbers is drastic, as the multiplications and additions happen over several sequential steps. Even though the method of performing multiplication and addition using separate multiplication and addition enables the multiplications to occur in parallel, and then some of the additions to be performed in parallel, the overall addition still needs to be performed in various stages to generate a final output value. Further, re-normalizing and rounding is performed in each stage, which increases the delay in generating the output value. Therefore, there is a need for a method of processing a set of floating-point numbers more precisely and with less delay.

Described herein is a hardware implementation and method of processing a set of k floating-point numbers concurrently. The method includes receiving the inputs in their incoming format, generating the output of the multiplication unit in a first (intermediate) format, and then converting the first format to a number in a second (intermediate) format for performing addition (the output of which may be in a further format that may or may not be the same as any of the previously mentioned formats). More precisely the method includes receiving a floating-point number from each set in an incoming format, generating a product number having a first format by performing mantissa multiplication and exponent summation concurrently while emulating the precision of a chosen conventional multiplier. Further, the method includes processing the numbers in the second format concurrently (e.g. obtaining a sum by performing a single sum over all the numbers in the set, in contrast to performing multiple sums across the set) to generate an output value.

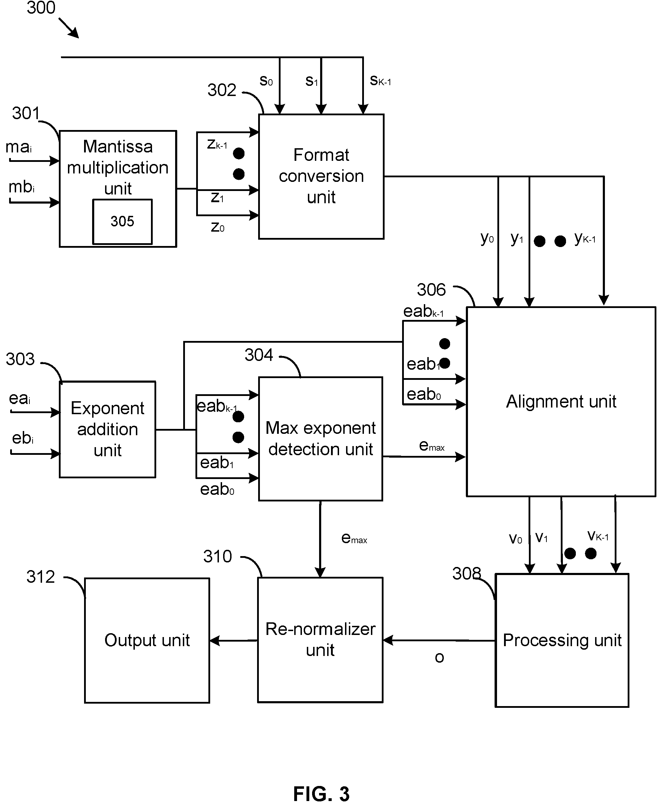

FIG. 3 is a block diagram illustrating an example of an implementation of an architecture for processing a set of k floating-point numbers. The architecture 300 is a dot product unit for performing multiplication and addition of a large array of 2k floating point numbers to generate an output value. The large array of 2k floating point numbers comprise a first set of k floating-point numbers (a₀, a₁, a₂... aₖ₋₁) and a second set of k floating-point numbers (b₀, b₁, b₂... bₖ₋₁). The architecture is particularly suitable for calculating the dot product of large arrays of numbers, but can be used to calculate the dot product of two, or more than two, numbers as required. The architecture 300 comprises a mantissa multiplication unit 301, a format conversion unit 302, an exponent addition unit 303, a maximum exponent detection unit 304, an alignment unit 306, a processing unit 308, and a re-normalizing unit 310. Each number in the first set of 'k' floating-point numbers comprises a mantissa maᵢ and an exponent eaᵢ. Each number in the second set of 'k' floating-point numbers comprises a mantissa mbᵢ and an exponent ebᵢ. Each number in the first set of 'k' floating-point numbers is having a mantissa bit length of 'p' bits and each number in the second set of 'k' floating-point numbers is having a mantissa bit length of 'q' bits. Both sets of 'k' floating-point numbers may be signed numbers or unsigned numbers. In the case of signed numbers, the numbers would also each comprise a sign bit (saᵢ or sbᵢ) as well as the mantissa and exponent. However, some floating-point formats (e.g. unsigned formats) may not include a sign bit.

The first set of k floating-point numbers (a₀, a₁, a₂... aₖ₋₁) and the second set of k floating-point numbers (b₀, b₁, b₂... bₖ₋₁) can be received in an input unit (not shown in the figure). The input unit can be a storage or a memory unit that can store the received inputs. Both sets of 'k' floating-point numbers are stored in an incoming format. Both sets of 'k' floating-point numbers may be of the same format or of different incoming formats for example if p≠ q.

The bit-length of the mantissa and exponent of the numbers in the incoming format is identified based on the type of the floating-point number format. The incoming format may be a predefined format that the architecture 300 is designed to receive, or may be identified on a task-by-task basis (e.g. by a controller, not shown). Examples of various types of the floating-point number formats include but are not limited to IEEE formats including half precision floating-point numbers (16 bit float), single precision floating-point numbers (float) and double precision floating-point numbers (double), or other formats such as a brain floating-point numbers (bfloat16). In one example, for the explanation of the method, we consider both the number aᵢ in the first set and number bᵢ in the second set to have the same incoming format as IEEE single precision floating-point format having a mantissa (maᵢ or mbᵢ) with a bit length of 23 bits and an exponent (eaᵢ or ebᵢ) with a bit length of 8 bits. In another example the informing formats of both the number aᵢ in the first set and number bᵢ in the second set may be different. For example, we consider IEEE single precision floating-point format as the incoming format of the number aᵢ in the first set having a mantissa maᵢ with a bit length of 23 bits and an exponent eaᵢ with a bit length of 8 bits, and we consider brain floating-point format as the incoming format of the number bᵢ in the first set having a mantissa mbᵢ with a bit length of 7 bits and an exponent ebᵢ with a bit length of 8 bits. However, it is understood that the invention is not limited to these (combinations of) formats and a person skilled in the art would understand that the architecture 300 could be implemented to use numbers in any type of the floating-point number format to perform the method described herein. The mantissa maᵢ of each number in the first set of 'k' floating-point numbers and the mantissa mbᵢ of each number in the second set of 'k' floating-point numbers stored in an incoming format is provided to a mantissa multiplication unit 301. Prior to providing the input the fractional part of the mantissa maᵢ having the bit length of 'p' bits may be extended by the implicit leading bit to obtain a normalised mantissa of p+1 bits. Similarly, the fractional part of the mantissa mbᵢ having the bit length of 'q' bits may be extended by the implicit leading bit to obtain a normalised mantissa of q+1 bits.

The mantissa multiplication unit 301 comprises a plurality of multiplier units configured to generate 'k' product numbers (z₀, z₁, z₂... zₖ₋₁) in a different, first, format, having a bit length of 'r' bits (where 'r' is an integer) as described in more detail below. Each multiplier unit is configured to perform a mantissa multiplication of corresponding mantissas from the first set and second set of k floating point numbers to obtain an intermediate mantissa product: ${mab}_{i} = {ma}_{i} \times {mb}_{i}$

The bit length of the full precision result obtained when performing the mantissa multiplication may be larger/smaller compared to r bits. Thus, mantissa multiplication unit 301 fits the output of the plurality of multipliers into a bit length of 'r' bits thereby generating product number zᵢ in the first format. Thus, the output of each multiplier unit, mantissa product mabᵢ is either rounded to r bits or padded with extra (zero) bits to fit the mantissa product into r bits. The value of bitlength 'r' is set based on the required precision of the dot product unit 300. In particular, 'r' can be (broadly) considered as accounting for the number of bits required to emulate the precision of the multiplication aspect of a conventional dot product unit. It will consist of a number of explicit leading bits and a number of fractional bits. As the input floating point numbers aᵢ and bᵢ are normalized before multiplication, the product number having bit length of r bits in the first format comprises two explicit leading bits (as the multiplication of two numbers between 1.0 inclusive and 2.0 exclusive may generate a number between 1.0 inclusive and 4.0 exclusive). Hence there is a need to increase the bitlength by one to account for the explicit leading '1' bit position during summation.

In a first case scenario, the hardware implementation of a dot product unit 300 may emulate the precision of P bits obtained with the dot product unit 100 using separate multiplication and addition units. In this context, a precision of P bit means that the dot product unit 300 achieves a precision not less than the worst-case precision achieved by the (emulated) dot product unit 100 generating a final output having a mantissa of P bits. In other words, P is the bit length of the mantissa output when performing multiplication and mantissa input when performing addition when implementing separate multiplication and addition units to perform dot product. However, for any given bit length P, the actual precision of the dot product unit 100 (as already discussed, due to the accumulation aspect) will depend on the order in which the inputs are processed. As such, in the present context, the dot product unit 300 is configured to be at least as precise as the worst-case precision that the emulated dot product unit 100 might achieve. To achieve this, when the hardware implementation of a dot product unit 300 emulates the precision of P bits obtained with the dot product unit 100, the bit length of 'r' bits is set as 'r=P+2' bits.

In a second case scenario, the hardware implementation of dot product unit 300 may emulate the precision of Q bits obtained with the dot product unit 200 using fused multiplication and addition units. Again, in this context, a precision of Q bits means that the dot product unit 300 achieves a precision not less than the worst-case precision achieved by the (emulated) dot product 200 generating a final output having a mantissa of Q bits. In other words, Q is the bit length of the mantissa output and accumulation mantissa input when performing multiplication and addition when implementing fused multiply and add units to perform dot product. However, for any given bit length Q, the actual precision of the dot product unit 200 (as already discussed, due to the accumulation aspect) will depend on the order in which the inputs are processed. As such, in the present context, the dot product unit 300 is configured to be at least as precise as the worst-case precision that the emulated dot product unit 200 might achieve. To achieve this, when the hardware implementation of dot product unit 300 emulates the precision of Q bits obtained with the dot product unit 100, the bit length of 'r' bits is set as 'r= max (Q+2, p+q+3)' bits.

As already mentioned, if the value of 'r' is less than the full precision bit length of mantissa multiplication i.e. p+q+2, then the mantissa product is faithfully rounded to obtain the desired bit length. Further, if the value of 'r' is greater than the full precision bit length of mantissa multiplication i.e. p+q+2, then the mantissa product is padded with zeros to obtain the desired bit length.

That is, if p+q+2>r bits, the mantissa product (mabᵢ) is faithfully rounded to r bits to obtain product number zᵢ. Rounding the mantissa product can be achieved in many ways. In one example, the plurality of multiplier units can be implemented using a truncated multiplier. When using the truncated multiplier to perform mantissa multiplication, the truncated multiplier directly computes r bits of the mantissa product mabᵢ by truncating the extra bits over 'r' bits thereby directly producing the product number zᵢ in the first format. In another example, the plurality of multiplier units can be implemented using a full multiplier. When using the full multiplier to perform mantissa multiplication, the multiplier computes an intermediate mantissa product mabᵢ, having a bit length of larger than 'r' bits which is further rounded to 'r' bits thereby generating the product number zᵢ in the first format.

Further if p+q+2 < r bits, the mantissa product (mabᵢ) is padded with extra least-significant bits to generate product numbers zᵢ having r bits. Thus, the product number zᵢ can be represented as a fixed point value mabᵢ2^{-r+2}.

Similarly, in order to emulate the precision of dot product unit 200, the value of 'r' is greater than the full precision bit length of mantissa multiplication, i.e. p+q+2, by at least one position (if Q+2 ≤ p+q+3) or more (if Q+2 ≥ p+q+3). Hence the mantissa product is padded with zeros to obtain the desired bit length.

Concurrently, the exponent eaᵢ of each number in the first set of 'k' floating-point numbers and the exponent ebᵢ of each number in the second set of 'k' floating-point numbers stored in an incoming format is provided to an exponent addition unit 303. The exponent addition unit comprises a plurality of adder units, each adder unit configured to generate an exponent sum, ${eab}_{i} = {ea}_{i} + {eb}_{i}$

The format conversion unit 302 receives 'k' product number numbers (z₀, z₁, z₂... zₖ₋₁) from the mantissa multiplication unit 301. The format conversion unit 302 converts 'k' product numbers (z₀, z₁, z₂... zₖ₋₁) in a first format to 'k' numbers in a different, second format (y₀, y₁, y₂... yₖ₋₁), as described in more detail below.

The format conversion unit 302 converts the 'k' product numbers (z₀, z₁, z₂... zₖ₋₁) in the first format to numbers in the second format. This comprises converting each product number zᵢ in the set of 'k' product numbers to a number 'yᵢ'. The format conversion unit 302 converts the product numbers zᵢ having a bit length of 'r' bits (in first format) to create the number 'yᵢ' with a bit length of 'n' bits (to represent a second format). The bit length of 'n' bits is obtained by adding both one or more extra most-significant bits (MSBs) and one or more extra least-significant bits (LSB) to the product number zᵢ (of bit length 'r' bits in the first format. Thus, the bit length 'n' is always greater than the bit length 'r' of the product numbers generated and hence greater than the original mantissa of the input floating point numbers aᵢ and bᵢ.

If the sets of 'k' floating-point numbers received are unsigned floating point numbers, then the representation of unsigned numbers created, with a bit length of 'n' bits includes n magnitude bits. If the sets of 'k' floating-point numbers received are signed floating point numbers, then the extra MSBs added to the mantissa of the first format can comprise a bit representing a sign bit. Thus, the representation of signed numbers created, with a bit length of 'n' bits includes a sign bit and (n-1) magnitude bits. The sign bits of the floating point numbers aᵢ and bᵢ are XORed to generate the sign bit of the corresponding number yᵢ.

The product numbers in the first format are converted to numbers in the second format based on the number of floating-point numbers (k) in the set. That is, the number of extra MSBs and LSBs added to the product numbers (zᵢ) of the first format is determined based on the number 'k'. The bit length of the product numbers (zᵢ) is extended to the MSB side by at least a logarithmic amount of the number 'k' ( $\left⌈{log}_{2}\left(k\right)\right⌉$) bits and to the LSB side by at least a logarithmic amount of the number 'k-1' ( $\left⌈{log}_{2}\left(k-1\right)\right⌉$) bits to obtain the number 'yᵢ'. An extra bit is added to the MSB to represent a sign bit if the input floating point numbers are signed floating point numbers. Therefore $\left⌈{log}_{2}\left(k\right)\right⌉ + 1$ extra MSBs and $\left⌈{log}_{2}\left(k-1\right)\right⌉ + 1$ LSBs are added on either side of the bit length 'r' of bit length of the product numbers (zᵢ). That is, one additional bit (other than the $\left⌈{log}_{2}\left(k\right)\right⌉$) bits) in the extra MSBs added is assigned for the sign bit sᵢ. The sign bit is obtained by XORing the sign bits of the corresponding input floating point numbers aᵢ and bᵢ. The additional bit (other than the $\left⌈{log}_{2}\left(k-1\right)\right⌉$) bits) in the extra LSBs added is a precision bit, for obtaining extra precision. The extra MSBs and LSBs added prevent overflow or underflow of bits, while processing the set of 'k' numbers which is explained in detail later. The numbers of extra MSBs and LSBs added to each side could be the same or different in different examples. In general, the bit length 'n' of the number 'yᵢ' in the second format can be obtained as $n = r + \left⌈{log}_{2}\left(k\right)\right⌉ + \left⌈{log}_{2}\left(k-1\right)\right⌉ + x bits$ where x is an integer and preferably x ≥ 1, and where the value of x depends on the number of extra bits added to represent leading bit, sign bit and precision bits, if any. For example, x may be as small as 1 when there are no sign bits in the original received numbers, or may be as small as 2 when the original received numbers do have a sign bit. In both cases, x may be larger to provide greater precision.

In a second different implementation, the product number zᵢ in the first format may comprise r + log (k-1) + 1 bits, instead of 'r' bits described in the above paragraphs, so that when performing the multiplication stage rounding (if p+q+2>r bits) as many bits as possible of the mantissa product are retained for addition. In such a case, in order to emulate the precision of P bits obtained with the dot product unit 100 using separate multiplication and addition units by the hardware implementation of a dot product unit 300, the bit length of 'r' bits is set as 'r=P+1-log(k-1)'.

In such a case, the format conversion unit 302 converts the product numbers zᵢ having a bit length of 'r+ log (k-1) +1' bits (in first format) to create the number 'yᵢ' with a bit length of 'n' bits (to represent a second format). The bit length of 'n' bits is obtained by adding one or more extra most-significant bits (MSBs) to the product number zᵢ of bit length 'r' bits in the first format. The bit length of the product numbers (zᵢ) is extended to the MSB side by at least a logarithmic amount of the number 'k' ( $\left⌈{log}_{2}\left(k\right)\right⌉$) bits. Also a number of additional bits can be added to the LSBs as precision bits, for obtaining extra precision. Thus, the bit length 'n' of the number 'yᵢ' in the second format can be obtained as $n = r + \left⌈{log}_{2}\left(k\right)\right⌉ + \left⌈{log}_{2}\left(k-1\right)\right⌉ + x bits$

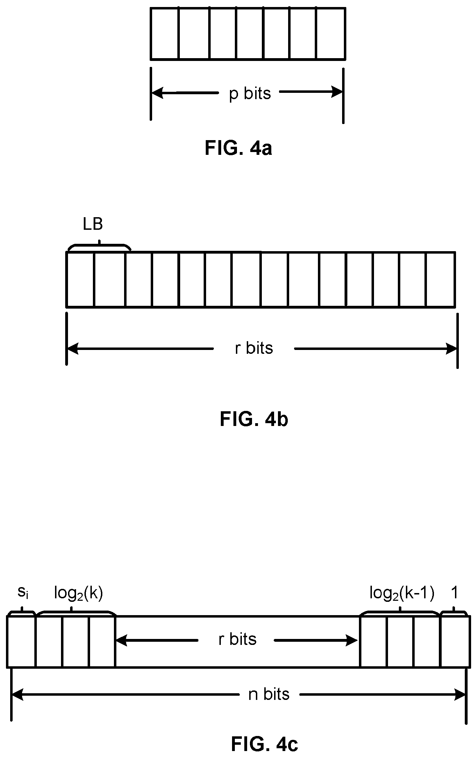

FIG. 4a illustrates the representation of a mantissa (either mantissa maᵢ or mbᵢ) in an incoming format in an example in which both sets of incoming numbers share a common format and FIG. 4b illustrates the representation of product numbers (zᵢ) in a first (intermediate) format. FIG. 4c illustrates the representation of signed numbers (yᵢ) in a second (intermediate) format. In FIG. 4a, the incoming format is shown as a brain floating point number with a mantissa bit length (p) of 7 bits.

FIG.4b shows the product numbers (zᵢ) represented in a first format having a bit length of 'r' bits. As discussed above, the bit length of 'r' bits is set as 'r=P+2' bits or as 'r= max (Q+2, p+q+3)' bits based on the required precision. The output obtained by multiplying the mantissas (maᵢ) having bit length of p bits and (mbᵢ), having bit length of q bits is truncated/ rounded to fit to r bits, if p+q+2>r. However, if p+q+2 < r bits, the output obtained by multiplying the mantissas (maᵢ) and (mbᵢ) is padded with extra least-significant bits to generate product numbers zᵢ having r bits. Suppose the value of r bits is 16 bits. The representation of the product number in the first format comprises two explicit leading bits (LB) as a part of the r bits.

FIG. 4c illustrates the representation of signed numbers (yᵢ) in a third format. The representation in the FIG. 4c illustrates signed number 'yᵢ' with a bit length of $n = r + \left⌈{log}_{2}\left(k\right)\right⌉ + \left⌈{log}_{2}\left(k-1\right)\right⌉ + 2$ bits. This is obtained by adding log₂(*k*) + 1 extra MSBs and log₂(*k* - 1) + 1 extra LSBs to the bit-length 'r' of the mantissa. Thus, in an example when a set of 8 floating point numbers, for which the bit length r is set to 17 bits (e.g. extended from an initial bit length of 7 as shown in FIG 4a), are added, i.e. k=8, then the signed number in the second format will have a bit length of n=25 bits.

It is clear from the example in FIG. 4c, that the number 'yᵢ' represented in a second format, as defined herein, comprises r bits which includes two bits assigned for representing the leading bits (LBs), a bit assigned for representing a sign bit (sᵢ), and a further $\left⌈{log}_{2}\left(k\right)\right⌉$ bits as extra MSBs, and $\left⌈{log}_{2}\left(k-1\right)\right⌉ + 1$ extra LSBs. As such, the number 'yᵢ' of the second format is a signed number and comprises both a sign bit and magnitude bits (i.e. the bits indicating the absolute magnitude of the represented value). The sign bit is assigned as a '0' or '1' bit based on whether the number is a positive or negative number.

In the example shown in FIG. 4c, the number 'yᵢ' comprises $\left⌈{log}_{2}\left(k-1\right)\right⌉ + 1$ extra LSBs added to the product numbers (zᵢ). The number 'yᵢ' could comprise $\left⌈{log}_{2}\left(k-1\right)\right⌉ + u$ extra LSBs added to the mantissa (mᵢ), where u is any integer, u≥1. Preferably, the number 'yᵢ' comprises $\left⌈{log}_{2}\left(k-1\right)\right⌉ + 1$ extra LSBs added to the product numbers (zᵢ). The extra LSBs added to the product numbers (zᵢ) increase the precision of the result obtained and reduce underflow of bits of the product number while aligning the number 'yᵢ' which is explained in detail below.

Thus, in the example described in the above paragraphs where the incoming format is a signed floating point number and the first format is a number that has two explicit leading bits, at least $\left⌈{log}_{2}\left(k\right)\right⌉ + 1$ extra MSBs and $\left⌈{log}_{2}\left(k-1\right)\right⌉ + 1$ LSBs are added on either side of the bit length 'r' of product numbers zᵢ to create the number 'yᵢ', thus making the number of additional bits x ≥ 2.

Similarly, in another example case, assuming the incoming format is an unsigned floating point number and the first format is a number that has two explicit leading bits, $\left⌈{log}_{2}\left(k\right)\right⌉$ extra MSBs and at least $\left⌈{log}_{2}\left(k-1\right)\right⌉ + 1$ extra LSBs are added on either side of the bit length 'r' of product numbers (zᵢ) to create the number 'yᵢ', thus making the number of the additional bits x ≥ 1.

Thus, in a generalized example, x ≥ 1 and x ≤ 'r' bits, making the maximum bit length of number 'yᵢ', $n = 2 r + \left⌈{log}_{2}\left(k\right)\right⌉ + \left⌈{log}_{2}\left(k-1\right)\right⌉$

The extra MSBs and LSBs added to the product numbers (zᵢ) other than the sign bit are initially assigned '0' bits in the second format. The sign bit is assigned as a '0' or '1' bit based on whether the number is a positive or negative number.

Further, the exponent sum 'eabᵢ' (eab₀, eab₁, eab₂, eab₃...eabₖ₋₁) of each pair of floating point numbers eaᵢ and ebᵢ in the first incoming format is provided as an input to the maximum exponent detection unit 304. The input 'eabᵢ' to the maximum detection unit is provided from the exponent addition unit 303 as shown in FIG. 3. In some other arrangements, the exponent sums may be passed through the format conversion unit 302 to the maximum exponent detection unit 304.

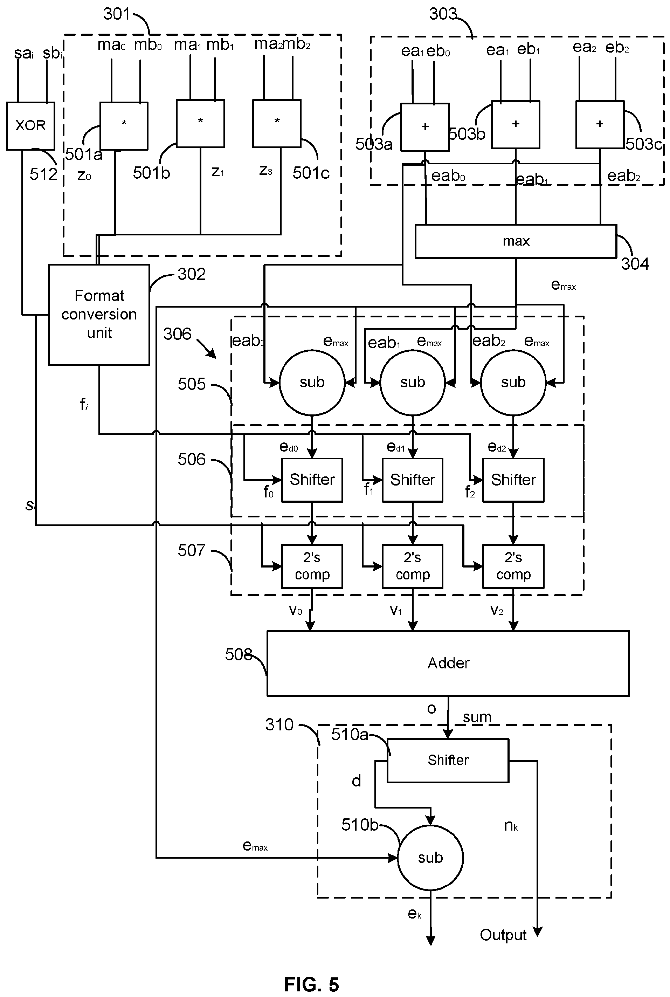

The maximum exponent detection unit 304 identifies the maximum exponent sum (eₘₐₓ) from the k exponent sums (eab₀, eab₁, eab₂, eab₃...eabₖ₋₁). The maximum exponent detection unit 304 detects the maximum exponent sum using various methods or functions. An example of a method of identifying the maximum exponent sum is using a binary tree structure. A method of identifying the maximum exponent sum (eₘₐₓ) is described in detail, below, with reference to FIG. 5. However, which option is preferable may depend on the available resources (e.g. parallel processing may be faster overall, but more computationally intensive).

In addition to being provided to the maximum exponent detection unit 304, the exponent sum values eabᵢ are provided, from the exponent addition unit 303, as input to the alignment unit 306. The alignment unit 306 receives the exponent sums 'eabᵢ' of each pair of floating point numbers aᵢ and bᵢ as a first input. The alignment unit 306 further receives the maximum exponent sum (eₘₐₓ) from the maximum exponent detection unit 304 as a second input and the number 'yᵢ' from the format conversion unit 302 as the third input. In one implementation, the alignment unit 306 may comprise the format conversion unit implemented as a part of the alignment unit rather than a separate unit. In such case the alignment unit 306 receives the product number 'zᵢ' as an input and converts the product number 'zᵢ' into the number 'yᵢ' before shifting. The alignment unit 306 aligns the magnitude bits of each number 'yᵢ', thereby converting the number 'yᵢ' to a different number (or integer vᵢ) with a bit-length of n bits based on the maximum exponent. The method of aligning the number 'yᵢ' is explained in detail with reference to FIG.5, but in summary the numbers in the second format are adjusted to be based on the maximum exponent, and the adjusted numbers (v₀, v₁, v₂...vₖ₋₁) are treated for convenience as integers for the subsequent processing in the processing unit 308.

Thereafter, the k integers (v₀, v₁, v₂...vₖ₋₁) thus generated are provided to the processing unit 308. The processing unit 308 is an adder unit. The processing unit 308 processes the k integers (i.e. the k aligned numbers) concurrently. That is the processing unit performs a process on all the integers in the set at the same time rather than, for example, processing elements of the set sequentially. The processing unit 308 performs addition of the k integers to generate an output value o. It is noted that addition of a negative number to a positive number is equivalent to performing a subtraction, and so the term processing is used herein to cover the acts of both addition and subtraction, alone or in combination.

The output value o from the processing unit 308 and the maximum exponent sum from the maximum exponent detection unit 304 is further provided into the re-normalizing unit 310. The renormalizing unit 310 converts the output value from the processing unit to a floating-point number with a mantissa mi and exponent 'ei'. The format of the output value can be selected depending on the desired precision (e.g. depending on whether the aim is to emulate the precision of an arrangement such as that of Fig. 1 or Fig. 2). The output unit 312 stores the converted output value (i.e. the output floating point number).

FIG. 5 is a block diagram illustrating the different units in the implementation of the architecture 300 in FIG. 3. Consider a scenario where the set of k floating point numbers in the first format comprises three numbers, i.e. k=3. The input unit (not shown in the figure) may receive a first set of three floating point numbers ai (a0, a1, a2) and a second set of three floating point numbers bi (b0, b1, b2) as input.

The mantissa multiplication unit 301 receives the mantissas (ma₀, ma₁, ma₂) of the first set of three floating point numbers (a₀, a₁, a₂) and the (mb₀, mb₁, mb₂) of the second set of three floating point numbers bᵢ (b₀, b₁, b₂) as input from the input unit. The mantissa multiplication unit 301 comprises a plurality of multiplier units 501a, 501b, and 501c. Each multiplier unit is configured to generate a product number zᵢ having a bit length of 'r' bits. Each multiplier unit is configured to perform a mantissa multiplication of corresponding mantissas from the first set and second set of k floating point numbers to obtain a mantissa product: ${mab}_{i} = {ma}_{i} \times {mb}_{i}$

The multiplier unit 501a multiplies the mantissas ma₀ and mb₀ of the floating point numbers a₀ and b₀ respectively to generate a product number z₀. Similarly, the multiplier unit 501b and 501c generate the product numbers z₁ and z₂ respectively.

As discussed earlier, the value of bitlength 'r' is set based on the required precision of the dot product unit 300. In a first case scenario, where the hardware implementation of dot product unit 300 emulates the precision of P bits obtained when performing dot product using separate multiplication and addition, the bit length of 'r' bits is set as 'r=P+2' bits. In a second case scenario, where the hardware implementation of dot product unit 300 emulates the precision of Q bits obtained when performing dot product using fused multiplication and addition, the bit length of 'r' bits is set as 'r= max (Q+2, 2p+3)' bits when both sets of floating point number have same incoming format (p=q) or 'r= max (P+2, p+q+3)' bits when both sets of floating point number have different incoming format (i.e. p≠q).

The plurality of multiplier units 501a, 501b and 501c may, in one example, be implemented using a truncated multiplier. When using the truncated multiplier to perform multiplication of the mantissas, the truncated multiplier directly computes r bits of the output by truncating the extra bits over 'r' bits thereby directly producing the product number zi in a first format. In another example, the plurality of multiplier units 501a, 501b and 501c may be implemented using a full multiplier. When using the full multiplier to perform mantissa multiplication, the multiplier computes an intermediate mantissa product mabi, having a bit length of larger than 'r' bits which is further rounded to 'r' bits thereby generating the product number zi in the first format.

If p+q+2>r bits, the mantissa product (mabi) is faithfully rounded to r bits. Further if p+q+2 < r bits, the mantissa product (mabi) is padded with extra least-significant bits to generate product numbers zi having r bits.

Concurrently, the exponent addition unit 303 receives the exponents (ea₀, ea₁, ea₂) of the first set of three floating point numbers (a₀, a₁, a₂) and the (eb₀, eb₁, eb₂) of the second set of three floating point numbers (b₀, b₁, b₂) as input from the input unit. The exponent addition unit 303 comprises a plurality of adder units 503a, 503b and 503c. Each adder unit is configured to calculate the sum of the exponent eaᵢ and the exponent ebᵢ of floating point numbers in each set to generate an exponent sum eabᵢ corresponding to each product number zᵢ ${eab}_{i} = {ea}_{i} + {eb}_{i}$

The adder unit 503a is configured to add the exponent ea₀ of the floating point number a₀ and the exponent eb₀ of the floating point number b₀ to generate an exponent sum eab₀. Similarly, the adder units 503b and 503c generates exponent sums eab₁ and eab₂ respectively.

In examples where the first set of three floating point numbers aᵢ (a₀, a₁, a₂) and a second set of three floating point numbers bᵢ (b₀, b₁, b₂) are signed floating point numbers, the sign bits of the corresponding floating point numbers ai and bi are XORed to obtain the value of a sign bit sᵢ (s₀, s₁, s₂) corresponding to the product numbers zᵢ (z₀, z₁, z₂).

The output of the mantissa multiplication unit 301 is further provided to the format conversion unit 302. In other words the plurality of multiplier units 501a, 501b and 501c in the mantissa multiplication unit 301 provides the product numbers z₀, z₁ and z₂ in the first format having a bit length of r bits to the format conversion unit 302. Further, the sign bits sᵢ (s₀, s₁, s₂) if any are also provided to the format conversion unit 302. The format conversion unit 302 converts the set of three numbers in the first format to three numbers yᵢ in the second format as described with reference to FIG. 3. In this example, consider both sets of 3 floating point numbers in the incoming format are signed numbers and the set of k product numbers in the first format comprises two explicit leading bits, holding the integer part of the mantissa. Therefore, the set of three floating point numbers are converted to three signed numbers having a bit-length of n bits including a sign bit sᵢ and (n-1) magnitude bits fᵢ including two explicit leading bits. In other example cases, both sets of three floating point numbers in the incoming format could be unsigned numbers.

Further, the exponent sums 'eabᵢ' (eab₀, eab₁, eab₂, and eab₃) from the exponent addition unit 303 are provided to the maximum exponent detection unit 304.

The maximum exponent detection unit 304 in FIG. 5 may comprise two maximum function logics to identify the maximum exponent sum. This is by way of example only, and other implementations may have a different structure for finding the maximum exponent, or similar structures but with a different number of logics to account for a different number of inputs.

In the example of using two maximum function logics, the first maximum function logic may receive the exponent sums eab₀ and eab₁. The first maximum function logic identifies the maximum exponent value among eab₀ and eab₁. Further, the output of the first maximum function logic and the exponent eab₂ are provided to the second maximum function logic. The second maximum function logic identifies the maximum exponent value among the output of the first maximum function logic and t exponent eab₂ to detect the eₘₐₓ i.e. the maximum exponent sum among the input exponent sums eab₀, eab₁, and eab₂.

As mentioned above, the maximum detection unit 304 can be implemented in different other ways. For example, maximum detection unit 304 can be implemented using a binary search tree.

Returning to the depicted example, the maximum exponent sum identified by the maximum detection unit 304 is provided as input to the alignment unit 306. Further, the exponent sums eab₀, eab₁, and eab₂ are provided as input to the alignment unit 306. Further the three signed numbers 'yᵢ' in the second format are provided as input to the alignment unit 306. The alignment unit 306 aligns the magnitude bits fᵢ of each signed number 'yᵢ', based on the maximum exponent sum and the respective exponent sum of the exponents of the numbers generating the product number in the first format corresponding to the signed number. In other words, the magnitude bits of the signed numbers for which the corresponding product number did not already have the sum of exponents as the maximum exponent are shifted to account for the difference in exponent sum for the pair of numbers in both sets compared to the maximum exponent sum (effectively adding zeros before the first (or, at least, the first non-zero) magnitude bit, and removing trailing bits as required, to re-align the magnitude bits as appropriate). The alignment unit 306 thus converts each signed number ('yᵢ') to another integer (vᵢ) that is output by the alignment unit 306. The integer vᵢ is considered as a fixed point number format. Similarly, in case of unsigned numbers the alignment unit shifts the magnitude bits of the unsigned numbers based on the maximum exponent sum and the respective exponent sum of the numbers generating the product number in the first format corresponding to the unsigned number.

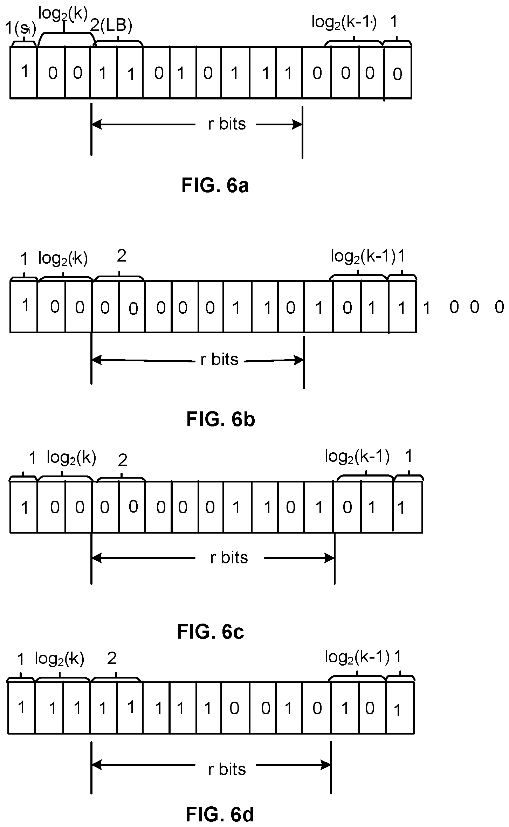

The conversion of the signed number 'yᵢ' to an integer vᵢ is illustrated with examples shown in FIG.6a- 6d. It will be appreciated, in describing this series of figures, that the starting point is the signed number 'yᵢ' in a second format number, as output by the format conversion unit 302, and the end point is the converted signed number vᵢ (integer vᵢ) mentioned above. However, for ease of reference, the intermediary stages may also be referred to as signed numbers in the description below.

Consider an example of two sets of three floating point numbers, each floating-point number in an incoming format with an implicit leading bit and a sign bit separate to the mantissa. Each number has a mantissa mᵢ having a bit length of 7-bits in the first format (such as bfloat 16). Suppose the bit length product number zᵢ generated by multiplying the mantissa of two floating point numbers one from each set is set as r=17 bits. Thus, in this example, each number in a set of three numbers, when converted to the second format comprises a signed number yᵢ having a bit length 'n' (including a sign bit sᵢ), where $\begin{matrix}n = r + \left⌈{log}_{2}\left(k\right)\right⌉ + \left⌈{log}_{2}\left(k-1\right)\right⌉ + 2 = 17 + \left⌈{log}_{2}\left(3\right)\right⌉ + \left⌈{log}_{2}\left(3-1\right)\right⌉ + 2 \\ = 17 + 2 + 1 + 2 = 22\end{matrix}$

FIG. 6a illustrates the signed number 'yᵢ' in the second format with a bit length of n bits. In an example, consider that the number shown FIG. 6a represents a signed number y₀ provided as input to the alignment unit 306. The alignment unit 306 comprises a plurality of subtraction modules 505. The alignment unit 306 further comprises a plurality of shifter units 506 and a plurality of complementing units 507.

The alignment unit 306 receives an exponent sum eabᵢ as a first input from exponent addition unit 303, the maximum exponent sum eₘₐₓ as a second input from the maximum exponent detection unit 304 and a signed number 'yᵢ' from the format conversion unit 302 as a third input. As explained in FIG.3, the format conversion unit 302 can, in one example, be implemented as a part of the alignment unit 306. The exponent addition unit 303 provides the exponent sum 'eabᵢ' of the three numbers to each subtraction module. Each of the subtraction modules receives an exponent sum eabᵢ as a first input from exponent addition unit 303, the maximum exponent sum eₘₐₓ as a second input from the maximum exponent detection unit 304. Each subtraction module calculates a difference 'e_{di}' between the maximum exponent sum 'eₘₐₓ' and the exponent sum 'eabᵢ' of two numbers number. In FIG. 5, a first subtraction module receives an exponent eab₀ of two first numbers from exponent addition unit 303 and the maximum exponent sum eₘₐₓ from the maximum exponent detection unit 304. The first subtraction module calculates a first difference referred to as e_{d0} in FIG.5. Similarly, the remaining subtracting modules calculate the differences e_{d1} and e_{d2,} as shown in FIG.5. As shown, the plurality of subtraction modules calculates the differences e_{di} for each number in parallel, but other arrangements are possible - e.g. a single subtraction module performing each subtraction in series. Returning to the example as depicted, each calculated difference e_{d0,} e_{d1,} and e_{d2} from the plurality of subtraction modules 505 is further provided to a corresponding shifter unit among the plurality of the shifter units 506.

Each shifter unit among the plurality of shifter units 506 receives the calculated difference e_{di} corresponding to a product number as a first input and the magnitude bits fᵢ of the corresponding signed number 'yᵢ' as the second input. Further, each shifter unit among the plurality of shifter units 506 shifts the magnitude bits fᵢ, of the signed number 'yᵢ' based on the corresponding calculated exponent difference. The magnitude bits fᵢ (except the sign bit) are shifted to the least significant bit side (i.e. the right in the depicted format) by a number of positions equal to the calculated exponent difference. FIG. 6a illustrates that the magnitude bits fᵢ of signed number 'y₀' of the first input include the 'r bits' corresponding to the bits of the product number in the first format, comprising two explicit leading bits. The remaining extra bits of the signed number 'y₀' are padded with '0' bits. The original 'r bits' as well as the explicit leading bits are shifted by the shifter unit. Further, in FIG. 6a, the sign bit of the signed number y₀ is assigned with a '1' bit indicating that the signed number y₀ is a negative number. The sign bit is not shifted by the shifter unit.

In the example, a first shifter among the plurality of shifters 506 receives the first input (magnitude bits f₀ of the signed number y₀), from the format conversion unit 302. Further, the first shifter receives the calculated difference e_{d0} (in an example, for the first number having a mantissa (f₀) shown in FIG. 6a, consider that the calculated difference e_{d0} (difference eₘₐₓ and eab₀) is equal to 4) from the first subtraction module as the second input. Therefore, the first shifter unit shifts the magnitude bits f₀ of signed number y₀ by 4 positions to the right. FIG.6b illustrates the shifted number. The calculated difference e_{d} is never a negative number. Thus, the magnitude bits fᵢ are always shifted to the least significant bit side (i.e. to the right in the example) based on the calculated difference e_{d} for each number, possibly by zero positions.

Similarly, the other shifter units among the plurality of shifter units 506 shift the magnitude bits (f₁, f₂ and f₃) of the remaining three numbers based on the corresponding calculated differences e_{d1,} e_{d2,} and e_{d3}. Thus, all the shifter units in the plurality of shifter units 506 perform the shifting of magnitude bits fᵢ in parallel whereas in most of the existing architectures for processing floating point numbers, the shifter shifts or aligns the mantissa in sequence as and when required which increases the delay to a considerable extent. Since, in the disclosed architecture, as the shifting or aligning of all the numbers occurs in parallel, the delay in processing could be significantly reduced as the number of floating-point numbers to be processed increases. In another implementation, it is possible that the plurality of shifter units 506 perform the shifting of magnitude bits fᵢ in series despite the fact that delay is increased due to limitation on the available resources (e.g. parallel processing may be faster overall, but more computationally intensive).

It can be seen in FIG. 6b that the shift of the magnitude bits results in 4 bits being shifted out of the bit-width of the signed number (and thus out of the stored representation of the number). The shifter units truncate the bits of the signed number that are shifted outside the bit length of n bits. The bits corresponding to the mantissa of the original number in the first format are shifted out of the bit length of 'n' bits when the calculated exponent difference for the corresponding number is greater than the number of extra LSBs added to the mantissa mᵢ of the number in the first format when converting to the second format. When the calculated difference is greater than the number of extra LSBs, it causes underflow of bits from the original (first format) mantissa. When the calculated difference is less than the number of extra LSBs, it only causes underflow of 'zero' bits added by the format conversion unit 302. As mentioned above, FIG. 6b shows the 4 bits that are moved out of the bit length of n bits, when the bits were shifted by 4 bits. FIG. 6c illustrates the signed number after performing truncation. It is evident from the figure that though the bits are shifted by 4 bits, only 1 bits of the actual number (i.e. 1 bit of the product number in the first format) is lost in this case, due to the extra LSBs that were added during conversion to the second format. Thus, the extra LSBs act to reduce the loss of precision that would occur if, for example, all numbers were shifted to use the same, maximum, exponent in the first format.

The output from the each of shifter unit 506 is further provided to a corresponding complementing unit among the plurality of complementing units 507. The complementing units receive the aligned magnitude bits from the shifter units as a first input and the sign bit of the signed number 'yᵢ' as a second input. However, in other arrangements, the function of the complementing unit could be performed before the function of the shifting unit or as a part of adder unit (processing unit 308). In any case, the complementing unit performs the two's complement of the magnitude bits fᵢ for those numbers having a sign bit indicating a negative number. In this case, the shifted positive signed numbers in the set are provided to the processing unit 308 (adder 508 in FIG. 5) without complementing. Further, the two's complements of the negative numbers in the set are provided to the processing unit. The processing unit 308 receives the output from the plurality of complementing units 507 and processes the aligned signed numbers vᵢ concurrently to generate the output. The output obtained from each complementing unit is an aligned number vᵢ. FIG. 6d represents the number p₀ obtained by complementing the mantissa as shown in FIG 6c.

Thus, the alignment unit 306 aligns the magnitude bits of the number 'yᵢ' to generate a set of numbers (or integers) vᵢ by performing the steps of shifting and truncating the magnitude bits fᵢ of the number 'yᵢ'. The alignment unit also converts to two's complement representation any numbers with a sign bit indicating the number is negative. In case of unsigned numbers 'yᵢ', the alignment unit performing the steps of shifting and truncating the magnitude bits fᵢ of the number 'yᵢ'. The only difference is that there is no need of performing the step of complementing in case of unsigned number. The alignment unit 306 is capable of processing each number in parallel for the steps of shifting, truncating and complementing the bits of the mantissa. The number vᵢ obtained after conversion is an integer. The number vᵢ is computed as ${v}_{i} = \left⌊{y}_{i}\times {2}^{{e}_{max} - {e}_{i} + \left⌈{log}_{2}\left(k-1\right)\right⌉ + 1}\right⌋$

In a different implementation, the alignment unit 306 may perform a step of rounding up after shifting the magnitude bits fᵢ of the number 'yᵢ' rather than truncating. In such a case, the integer vᵢ can be obtained by rounding up the magnitude bits fᵢ of the number 'yᵢ'. Thus, the number vᵢ is computed as ${v}_{i} = \left⌈{y}_{i}\times {2}^{{e}_{max} - {e}_{i} + \left⌈{log}_{2}\left(k-1\right)\right⌉ + 1}\right⌉$

It would be evident for a person skilled in the art that the step of rounding the number 'yᵢ' can be performed by implementing any rounding up or rounding down methods. As shown in FIG. 5, the converted numbers i.e. the integers v_{0,} v_{1,} v₂ and v₃ are further provided to the adder 508 which is the processing unit 308. The signed integer v₀, thus generated by performing shifting, truncating, and complementing the magnitude bits f₀ of the signed number y₀ in the example is illustrated in FIG. 6d. In an example, the adder 508 is a carry save adder capable of adding 3 'n' bit integers. The value of the integer vᵢ ranges between $- {2}^{r + \left⌈{log}_{2}\left(k\right)\right⌉ + \left⌈{log}_{2}\left(k-1\right)\right⌉ + 1}$ and ${2}^{r + \left⌈{log}_{2}\left(k\right)\right⌉ + \left⌈{log}_{2}\left(k-1\right)\right⌉ + 1} - 1$. The carry save adder performs the addition of 3 signed integers vi to generate a sum value o (output). $o = {\sum }_{i = 0}^{k - 1} {v}_{i}$

The magnitude of the summands (i.e. the 3 integers vᵢ) is less than ${2}^{r + \left⌈{log}_{2}\left(k\right)\right⌉ + \left⌈{log}_{2}\left(k-1\right)\right⌉ + 1}$ and hence the sum value will be less than ${2}^{r + \left⌈{log}_{2}\left(k\right)\right⌉ + \left⌈{log}_{2}\left(k-1\right)\right⌉ + 1}$ and does not overflow the 'n' bits. That is, the largest possible value integer yᵢ will have a 1 exactly one position from the MSB end (accounting for the sign bit), resulting in vᵢ having a 1 at least $\left⌈{log}_{2}\left(k\right)\right⌉ + 1$ bits from the MSB end (again accounting for the sign bit), and the sum of k numbers of that value (i.e. considering the extreme case where all the numbers have the maximum exponent sum) cannot overflow the additional $\left⌈{log}_{2}\left(k\right)\right⌉$ bits provided at the MSB end after the sign bit. The adder 508 processes the set of 'k' floating point numbers to generate the same output value irrespective of the order in which the set of 'k' floating point numbers are provided as inputs.

The sum value o is further provided to the re-normalizing unit 310. It will be noted that in this example the value o, like the values vᵢ, will be a signed integer in two's complement format. The normalizing unit 310 comprises a shifter 510a and a subtractor 510b. The shifter 510a shifts the bits of the sum value o to generate a normalized value (in general format). The shifter 510a represents the sum value o in a normalized format by counting the number of leading '0' bits or '1' bits (represented as 'd') occurring continuously in the MSB's (i.e. including the sign bit). The number of leading '0' bits are counted when the sum value obtained is a non-negative number and the number of leading '1' bits are counted when the sum value obtained is a negative number. The shifter shifts the bits of the number to generate a normalized number (nₖ) in a normalized format. The number (nₖ) is further rounded to represent the normalized number (nₖ) with a desired bit-length -The normalized number (nₖ) is represented as (assuming $\left⌈{log}_{2}\left(k\right)\right⌉ + 1$ MSBs were added when converting to the second format): ${n}_{k} = o \times {2}^{\left⌈{log}_{2}\left(k\right)\right⌉ + 1 - d}$

The subtractor 510b receives the maximum exponent sum as the first input and d (the number of leading '0's or '1's) and the number of extra LSBs added to the mantissa of the first format) as the input. Further, the subtractor calculates the exponent of the normalized number based on the inputs and represents the exponent over a bitlength equal to the maximum of the bit length of the exponent of the floating point number aᵢ or the bit length of the exponent of the floating point number bᵢ, with an additional bit. i.e. the exponent of the normalized number is represented over a bit length of 'max (bit length of eaᵢ, bit length of eb_{i,})+1' bits. The exponent of the final output is calculated as (again, assuming $\left⌈{log}_{2}\left(k\right)\right⌉ + 1$ MSBs were added when converting to the second format) ${e}_{k} = {e}_{max} + \left⌈{log}_{2}\left(k\right)\right⌉ + 2 - d$

This is an example, and it is not limited to a person skilled in the art that in other examples, different other known methods can be used to calculate the exponent *eₖ*. The final output or the sum value obtained is thus represented with a normalized mantissa (nₖ) and the exponent (eₖ).

The architecture 300 of the adder can be used to add any number of floating point numbers. The example shown in FIG. 5 is a specific example of the dot product unit 300 for performing dot product of a set of 3 floating point numbers. Further, additional number of elements can be added to each unit in the adder 500 in a similar manner, thereby expanding it to perform dot product of any number of floating-point numbers (for example 20 floating-point numbers or 50 floating-point numbers) concurrently.

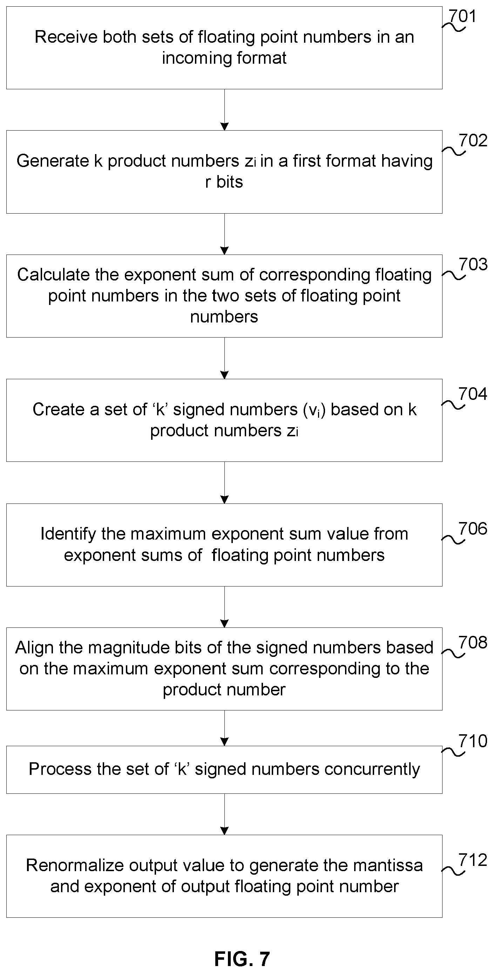

FIG. 7 is a flowchart illustrating a method of processing two sets of 'k' floating point numbers. The method includes performing dot product, using a hardware implementation of an architecture 300 for performing dot product multiplication. The method includes performing multiplication and addition operations on a large array of 2k floating point numbers to generate an output value. The large array of 2k floating point numbers comprises a first set of k floating-point numbers (a₀, a₁, a₂... aₖ₋₁) and a second set of k floating-point numbers (b₀, b₁, b₂... bₖ₋₁).

In step 701, the method includes receiving both sets of 'k' floating point numbers each in an incoming format. Each number in the first set of 'k' floating-point numbers comprises a mantissa maᵢ and an exponent eaᵢ. Each number in the second set of 'k' floating-point numbers comprises a mantissa mbᵢ and an exponent ebᵢ. The mantissa maᵢ of the number aᵢ is having a bit length of 'p' bits and the mantissa mbᵢ of the number bᵢ is having a with a bit length of 'q' bits. Both sets of 'k' floating-point numbers may be signed numbers or unsigned numbers. The bit-length of the mantissa and the bit-length of the exponent (eᵢ) in the incoming format is identified based on the type of the floating-point number format. Further the floating-point numbers could be signed or unsigned number with an implicit or explicit leading bit. For example, a single precision (32 bit) floating point number as an incoming format, may typically be a signed number with an implicit leading bit that comprises a mantissa having a bit-length of 23 bits without including the leading bit, an exponent having bit length of 8 bits and an extra sign bit (sᵢ). In other examples a single precision (32 bit) floating point number in a first format may be a signed number with an explicit leading bit, and then the mantissa has a bit length of 23 bits including the explicit leading bit.

When the single precision (32 bit) floating point number in the incoming format is an unsigned number with an implicit leading bit there would not be any extra sign bit and the mantissa could be represented by a bit length of 24 bits (without including the leading bit). Further when the single precision (32 bit) floating point number in the incoming format is an unsigned number with an explicit leading bit, the bit length of 24 bits of mantissa includes an explicit leading bit. Both sets of 'k' floating-point numbers may be of the same incoming format or of different incoming format such as if p≠ q.

On receiving the set of 'k' floating point numbers in the first format, at step 702, the method includes generating 'k' product number numbers (z₀, z₁, z₂... zₖ₋₁) in a different, first, format, having a bit length of 'r' bits. Prior to providing the input the fractional part of the mantissa maᵢ having the bit length of 'p' bits may be extended by the implicit leading bit to obtain a normalised mantissa of p+1 bits. Similarly, the fractional part of the mantissa mbᵢ having the bit length of 'q' bits may be extended by the implicit leading bit to obtain a normalised mantissa of q+1 bits. The k product numbers are generated by performing a mantissa multiplication of corresponding mantissas maᵢ and mbᵢ from the first set and second set of k floating point numbers and fitting the output of each mantissa multiplication into a bit length of 'r' bits.

The value of bitlength 'r' is set based on the required precision of the dot product unit 300 as explained earlier. In order to emulate the precision obtained with the dot product unit 100 using separate multiplication and addition, the bit length of 'r' bits is set as 'r=P+2' bits. Further to emulate the precision obtained with the dot product unit 200 using fused multiplication and addition, the bit length of 'r' bits is set as as 'r= max (Q+2, p+q+3)' bits.

That is, if p+q+2>r bits, the mantissa product (mabᵢ) is faithfully rounded to r bits to obtain product number zᵢ. Further if p+q+2 < r bits, the mantissa product (mabᵢ) is padded with extra least-significant bits to generate product numbers zᵢ having r bits.

At step 703, the method includes generating a sum eabᵢ of the exponent eaᵢ of a number in the first set of 'k' floating-point numbers and the exponent ebᵢ of a corresponding number in the second set of 'k' floating-point numbers. This step could be performed before or after the step 702 or could be even performed in parallel to the step 702.

Further, at step 704, the method includes converting the 'k' product numbers (z₀, z₁, z₂... zₖ₋₁) in a first format to 'k' numbers (yo, y₁, y₂... yₖ₋₁) into a different, second format. The numbers (yᵢ) are obtained by adding both extra MSBs and extra LSBs to the bit-length 'r' of the product number zᵢ in the first format. The bit length of r bits is extended based on the number 'k' (the number of floating-point numbers in the set). In an example with the sets of 'k' floating point numbers in the incoming format as signed numbers adding extra MBS and LSBs comprises adding preferably $\left⌈{log}_{2}\left(k\right)\right⌉ + 1$ number of the most-significant bits and $\left⌈{log}_{2}\left(k-1\right)\right⌉ + 1$ number of least-significant bits. The number of extra MSBs and extra LSBs added to the bit-length b of the mantissa could be the same or different. The extra MSBs added include, in this example, a bit representing a sign bit. Thus, the signed number is represented with a bit-length of 'n' bits including the sign bit sᵢ. The bit length 'n' is represented as $n = r + \left⌈{log}_{2}\left(k\right)\right⌉ + \left⌈{log}_{2}\left(k-1\right)\right⌉ + x bits$ where x is an integer and preferably x ≥ 2.

Further, the method at step 706 comprises identifying a maximum exponent sum (eₘₐₓ) among the exponent sums (eabᵢ) of the set of 'k' floating point numbers. The maximum exponent sum (eₘₐₓ) is identified by a maximum exponent detection unit 304. The maximum exponent detection unit 304 implements an algorithm such as a maximum function for identifying a maximum value among a set of values (exponent sums eabᵢ). Step 706 could be performed before or after the step 704 or could be even performed in parallel to the step 706.

The method further comprises, at step 708, aligning the magnitude bits of the numbers 'yᵢ' to be based on the maximum exponent sum (eₘₐₓ). The number 'yᵢ' is an integer represented as a fixed-point number having a bit length of n-bits. The method of aligning the magnitude bits of the numbers is discussed with respect to FIG.7b. Aligning the magnitude bits of the numbers based on the maximum exponent sum is performed by an alignment unit 306. The alignment unit 306 thus generates an aligned number which is an integer vᵢ.

The method further comprises, at step 710, processing the set of 'k' aligned numbers vᵢ concurrently to generate an output value o. The processing of the integers vᵢ includes performing addition of the k numbers. It is noted that addition of a negative number to a positive number is equivalent to performing a subtraction, and so the term processing is used herein to cover the acts of both addition and subtraction, alone or in combination. The processing of the k numbers is performed concurrently. That is the processing unit performs a process on all the integers in the set at the same time rather than, for example, processing elements of the set sequentially or processing the elements of the set in pairs. The processing unit 308 performs addition of the k integers to generate an output value.

Further, at step 712, the method includes renormalizing and rounding the output value o to represent the output value as a floating-point number in any format with a normalized mantissa nₖ and an exponent eₖ. The method includes renormalizing the output value to represent the output value o as a standard normalized number. Further, the method performs rounding the normalized number nₖ to represent the number with a mantissa having a particular bit-length. For example, the normalized number is rounded to a bit length depending on the desired precision (e.g. depending on whether the aim is to emulate the precision of an arrangement such as that of Fig. 1 or Fig. 2). The normalizing is performed by initially counting the number of recurring '0' bits or '1' bits on the MSB side. The recurring '0' bits are counted when the output value 'o' is a positive number. The recurring '1' bits are counted when the output value 'o' is a negative number. Further, the normalizing is performed by shifting the bits of the output value o to the LSB side around the radix point to represent the signed number as a standard normalized number. Further, the method calculates an exponent value based on the maximum exponent and the counted number of recurring bits. Thus, the output 'o' is normalized to be represented as a floating-point number in the first format.

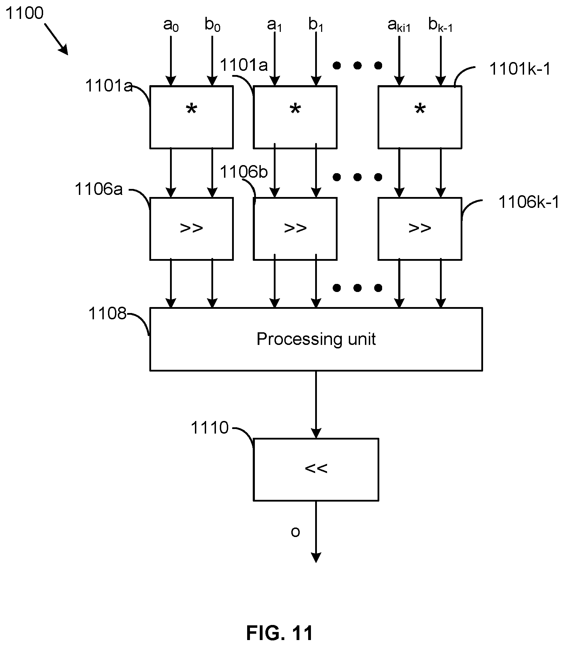

Further the architecture 300 can also be implemented as a dot product unit as shown in FIG. 11, for multiplying the two sets of floating-point numbers, in an optimised manner. The dot product unit 1100 comprises an multiplication unit 1101 comprising a plurality of multiplier units 1101ₐ, 1101_{b},... 1101ₖ₋₁, an alignment unit comprising a plurality of shifter units 1106ₐ, 1106_{b},... 1106ₖ₋₁, an accumulator unit 1108 and a normalizer unit 1110

The dot product unit 1100 receives a large array of floating point numbers comprising a first set of k floating-point numbers (a₀, a₁, a₂... aₖ₋₁) and the second set of k floating-point numbers (b₀, b₁, b₂... bₖ₋₁). The plurality of multiplier units 1101ₐ, 1101_{b}, ..1101ₖ₋₁, performs multiplication of the mantissas maᵢ and mbᵢ as explained with respect to FIGs 3 and 5. However, each multiplier unit 1101ᵢ generates two intermediate mantissa products, a first intermediate mantissa product mᵢ' and a second intermediate mantissa products mᵢ" such that the sum of mᵢ' and mᵢ" generates the full precision mantissa product mabᵢ. This feature exploits the fact that hardware multipliers typically operate based on shifting and adding, such that the final calculation step is normally an addition of two numbers. In the present example, that final addition can be omitted, because the multiplication is followed by an addition anyway, so two inputs can be sent to the subsequent addition, rather than one (i.e. the multiplication result is in carry-save form). This increases the number of values to be summed in the next stage, but reduces the size of the multiplication units required to implement the dot product unit which may be desirable to reduce latency or area of the implementation. As will be apparent from consideration of FIGs 3 and 5, this will result in 2k product numbers comprising k product numbers zᵢ' and k product numbers zᵢ" being output from the mantissa multiplication unit, which are generated by rounding or padding the intermediate mantissa products mᵢ' and mᵢ". To ensure the same precision as using a fully resolved multiplication output (i.e. the full mantissa product mabᵢ), the carry-save outputs (i.e. the intermediate mantissa products mᵢ and mᵢ') are output with a bit length r for product numbers zᵢ' and zᵢ" that is extended by one precision bit compared to that detailed above with respect to using fully resolved multiplication outputs.

Further, the product numbers (zᵢ' and zᵢ") from each multiplier unit 1101ᵢ are provided to the shifter unit 1106ᵢ in the alignment unit. Each shifter unit 1106 may comprise two shifters for shifting the product number zᵢ' and zᵢ". In another example the shifter unit may comprise only one shifter unit and the product number zᵢ' and zᵢ" may be provided sequentially to be shifted by the shifting unit.

The alignment unit comprising the plurality of shifter units 1106ₐ, 1106_{b},... 1106ₖ₋₁ converts each product number zᵢ' and zᵢ" to generate 2k numbers yᵢ. having a second format. The 2k numbers yᵢ may be represented for simplicity as k numbers yᵢ' and k numbers yᵢ" generated based on the product number zᵢ' and zᵢ". Each shifter unit aligns the numbers yᵢ' and yᵢ" having the second format based on the exponent sum and the max exponent sum as explained in detail in FIG. 3 and 5, to generate integers vᵢ' and vᵢ". Further the numbers vᵢ' and vᵢ" in the second format are provided to the accumulator 1108 which i 'is a processing unit as shown in Fig 3' or 'is an adder as shown in Fig 5.

The aligned number vᵢ' and vᵢ" in the second format are further added by the processing unit to obtain the output o'. The output is further normalized by the normalizing unit 1110 to generate a normalized floating point number as the final output based on the exponent sum and the max exponent sum as explained in detail in FIG. 3 and 5.

The architecture eliminates a final step of generating a fully resolved multiplication output by the multiplication unit. Instead an intermediate mantissa product which is a carry save representation is converted and added together. The architecture 1110 reduces the carry propagate adder delay and area. However, the architecture 1110 requires twice as many shifting operations, and thus twice as many shifters (to avoid additional latency), as required for the architecture 300 or 500.

In another embodiment, each multiplier unit 1101ᵢ among the plurality of multiplier units 1101ₐ, 1101_{b}, ..1101ₖ₋₁,in the dot product unit shown in FIG. 11, performs multiplication of the mantissas maᵢ and mbᵢ to generate two product numbers (zᵢ' and zᵢ") each having a bit length r+ log(k-1)+2 bits compared to the r+1 bits as explained in the above paragraph with reference to FIG.11. As discussed above in connection with the fully-resolved multiplier example, this maintains additional precision from the multiplication into the accumulation stage of the dot product unit, by extending the multiplication output LSBs as far as the minimum additional LSB extension that would otherwise be performed at the accumulation stage. Further, the product numbers (zᵢ' and zᵢ") from each multiplier unit 1101ᵢ are provided to the shifter unit 1106ᵢ in the alignment unit. The alignment unit further perform the steps as explained with respect to FIG. 3, FIG. 5 and FIG. 11 to generate integers vᵢ' and vᵢ". Further the numbers vᵢ' and vᵢ" in the second format are further processed to obtain the output of the dot product.

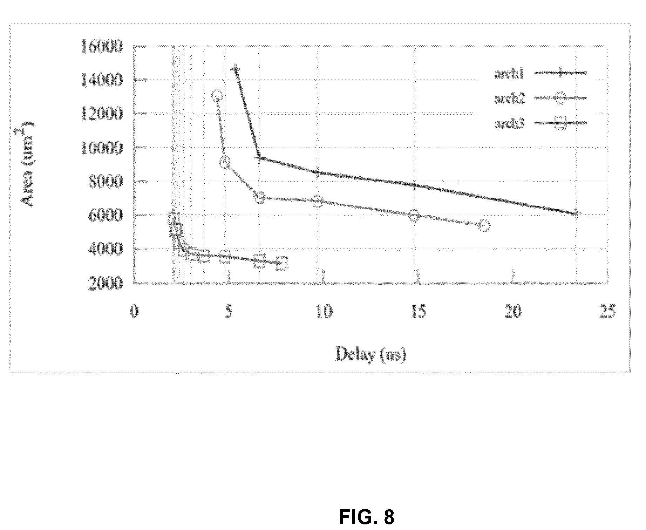

FIG 8 is a graph illustrating a comparison of the implementation of the architecture 300 with other standard architectures for processing a set of floating-point numbers. This is particularly relevant to the accumulation aspect of a dot product unit. However, for clarity, it is noted that FIG. 8 is discussed more generally than the context of a dot product unit.

In the FIG. 8 a graphical representation of results of a first experiment comparing the implementation of the architecture 300 explained in FIG. 3 with other standard architectures is shown. The first experiment includes comparing area versus delay trade-offs of the different architectures. As shown in FIG.8, in the first experiment, three architectures (arch 1, arch 2 and arch 3) are used for comparison. The arch 1 is an architecture of a balanced tree of floating-point adder implementation (with pairwise round to nearest and tie to even implementation). The results obtained for arch 1 are represented by cross (+) symbols on a first curve in FIG. 8. The arch 2 is another architecture of a balanced tree of floating-point adder implementation (with pairwise faithful rounding implementation). The results obtained for arch 2 are represented by circle (o) symbols on a second curve shown in FIG. 8. The arch 3 is the implementation of the architecture 300 disclosed in this document (with faithful rounding implementation). The results obtained for arch 3 are represented by square symbols on a third curve in FIG. 8. In the first experiment, the three architectures are implemented in software using VHDL.

In the first experiment, a set of floating-point numbers in a first format of single precision (32-bit) floating point number was used as input. Each floating-point number comprised a mantissa mᵢ having bitlength 'r' of 24 bits (r=24 bits), exponent 'eᵢ' having a bitlength 't' 8 bits (t=8 bits) and a sign bit. The first experiment included synthesising the three architectures for various timing targets so as to observe area versus delay trade-offs. From the graph in FIG. 8 it is observed that the arch 3 (architecture 300) has the least delay and least area. In particular, the fastest circuit synthesized from architecture 300 uses less than 50% the area and has less than 50% the delay of the fastest circuits synthesized from the other architectures under consideration.

Further, the complexity of the hardware implementation of the different architectures are compared. The complexity of the hardware implementation such as the critical path is expressed using the Big O Notation. For the architecture 300, the maximum exponent detection unit 304 is implemented with O(log(k) log(t)) gates on the critical path (where k is the number of values being summed by the adder). Further, the alignment unit 306 is implemented with O(log(r)) gates on the critical path. The processing unit (308) i.e. the adder 508 is implemented with O(log(k) + log(r)) gates on the critical path. The normalizing unit 310 is implemented with O(log(t)) gates on the critical path. Thus, the total hardware implementation could be implemented with O(log(k) log(t) + log(r)) logic gates on its critical path. For increasing array size k and mantissa width r, the critical path is asymptotically shorter than architectures of a balanced tree of floating-point adders.

For the same input of the set of k floating point numbers in the first format, a straightforward implementation of a multiple-input adder consisting of a binary tree of floating-point adders (with a fixed rounding mode, for instance rounding towards zero) is explained below. By construction, the implementation produces a pairwise faithfully rounded sum. The critical path in a balanced tree of floating-point adders goes through O(log(k)) adders, each adder featuring O(log(rt)) gates on its critical path. In total, architectures of a balanced tree of floating-point adders thus have O(log(k) log(rt)) logic gates on their critical path.

Further, the implementation of the architecture 300 generates output having a precision not worse than the worst case of the pairwise addition performed while using the architecture 100 of binary tree adders and multipliers or the architecture 200 of fused multiplication and addition units with faithful rounding. A mathematical proof for the precision of the architecture 300 is provided later. It is shown that the accuracy of the floating-point summation result is not lower than the worst-case pairwise floating-point addition with a faithful rounding scheme. This means that for any given array to be summed, performing pairwise addition by iteratively replacing two terms in the array by their sum rounded to the nearest larger or smaller representable value can always yield a result less precise or equal to the result generated by addition as part of the architecture 300 disclosed. An imprecise choice of ordering the inputs and for performing the step of rounding, in known architectures, is to add numbers in increasing magnitude to the largest one and always round in the same direction. As the precision of intermediate multiplication results is also not less than in architectures 100 or 200, the precision of output obtained by the architecture 300 is not less precise than that the result obtained by making these choices.

The delay and area performance of the architecture 300 dramatically improves compared to a tree of floating-point adders by removing intermediate normalisation steps and replacing intermediate carry propagation steps with a single carry-save addition as shown in FIG.8. The empirical precision of the architecture 300 as described above is shown to significantly outperform trees of floating-point adders as measured on Gaussian distributed inputs centred around zero.

Finally, the architecture 300 is commutative for addition, such that any order of input pairs (aᵢ, bᵢ) yields the same output. This leads to better reproducibility of result, as the order in which floating point numbers in two sets are bound to the inputs to the architecture 300 does not influence the result.

A mathematical proof for the precision of the architecture 300 is provided below. In the section below it is demonstrated that the precision of our algorithm is not less than the worst-case iterated pairwise addition with faithful rounding.

Firstly, some basic property of faithful rounding schemes are defined and proved. Let *F*1, *F*2 ⊆ R ∪ { ± ∞ } be two number formats and *r* ∈ *R* ∪ { ± ∞ } be a number. We say that q is a faithful rounding of r in format F, written *q* ≈*_{F} r*, when q is the least upper bound or the greatest lower bound of r in F.

We say that F1 is finer than F2 in the neighbourhood of r when the least upper bound and greatest lower bound of r in F2 belong to F1. The following proposition follows straightforwardly.

**Proposition 1:** If F1 is finer than F2 in the neighbourhood of r then for all values q1, q2 such that *q*1 ≈ _{*F*1} *r* and *q*2 ≈ _{*F*2} *q*1 we have *q*2 ≈ _{*F*2} *r*.

Now let H be a floating-point format with 't' exponent bits, 'r' mantissa bits including R fractional bits (and r-R explicit leading bits) and an exponent bias 'c' used at the input and output of our computation. We assume that the mantissa is normalised and its precision reduced to hold at most R+1 non-zero consecutive bits. In other words, numbers in format H have a mantissa such that at least one of the r-R leading bits is '1' and when *i* MSBs are '0', for some 0 ≤ *i* ≤ *r* - *R* - 1, then *r* - *R - i* LSBs are '0'. Further, a set of 'k' floating point numbers *x*₀, ... , *x*_{*k*-1} in format H is given as input. The algorithm proceeds by conversion to a fixed-point format G aligned on the largest exponent eₘₐₓ in the array.

Numbers in format G are given as a signed integer v over $r + \left⌈log\left(k\right)\right⌉ + \left⌈log\left(k-1\right)\right⌉ + 2$ bits, taking its value in the range $- {2}^{r + \left⌈log\left(k\right)\right⌉ + \left⌈{log}_{2}\left(k-1\right)\right⌉ + 1} , … {, 2}^{r + \left⌈log\left(k\right)\right⌉ + \left⌈{log}_{2}\left(k-1\right)\right⌉ + 1} - 1$ and representing the real number ${2}^{{e}_{max} - R - c - \left⌈log\left(k-1\right)\right⌉ - 1} v$. Each input floating point number *xᵢ* is converted to a fixed point value ${2}^{{e}_{max} - R - c \left⌈log\left(k-1\right)\right⌉ - 1} {v}_{i} {\approx }_{G} {x}_{i}$, where the choice of rounding is left to the implementation.

The fixed point values are then added together and their sum converted back to the original format hence producing the result $y \approx 2 {e}_{max} - R - c - \left⌈log\left(k-1\right)\right⌉ - 1 H {\sum }_{i = 0}^{k - 1} {v}_{i}$, where the choice of rounding is again left to the implementation.

For the purpose of this analysis numbers in the input array are classified in two categories: small numbers, whose absolute value is less than ${2}^{{e}_{max} - \left⌈log\left(k-1\right)\right⌉ - 1}$, and large numbers, whose exponent is at least ${2}^{{e}_{max} - \left⌈log\left(k-1\right)\right⌉ - 1}$. The input array is partitioned into an array of small numbers ${x}_{0}^{′} , … , {x}_{k ′ - 1}^{′}$ and an array of large numbers ${x}_{k ′}^{′} , … , {x}_{k - 2}^{′} , {x}_{k - 1}^{′}$ such that the exponent of ${x}_{k - 1}^{′}$ is *eₘₐₓ*. The count *k'* of small numbers verifies 0 ≤ *k'* ≤ *k -* 1. For all *i* = 0, ... , *k -* 1, ${n}_{i}^{′}$ and ${e}_{i}^{′}$ denotes the mantissa and exponent of ${x}_{i}^{′}$ respectively, and ${v}_{i}^{′}$ the conversion of ${x}_{i}^{′}$ to the fixed-point format *G*, such that ${2}^{{e}_{max} - R - c \left⌈log\left(k-1\right)\right⌉ - 1} {v}_{i}^{′} {\approx }_{G} {x}_{i}^{′}$. Remark that while small numbers may incur a rounding error, large numbers are represented exactly. This is because mantissas are normalised, hence any bit of weight less than ${2}^{{e}_{max} - R - c - \left⌈log\left(k-1\right)\right⌉ - 1}$ in a large number is guaranteed to be '0'.

A sequence *wᵢ* is constructed by letting ${w}_{0} = {2}^{{e}_{max} - R - c - \left⌈log\left(k-1\right)\right⌉ - 1} {v}_{k - 1}^{′} , {w}_{i} = {w}_{i - 1} + {2}^{{e}_{max} - R - c - \left⌈log\left(k-1\right)\right⌉ - 1} {v}_{i - 1}^{′}$ for *i* = 0, ... , *k* - 2, and *w*_{*k*-1} = *y*. Recall that $y \approx 2 {e}_{max} - R - c - \left⌈log\left(k-1\right)\right⌉ - 1 H {\sum }_{i = 0}^{k - 1} {v}_{i}$, hence ${w}_{k - 1} \approx w k - 2 H + {2}^{{e}_{max} - R - c - \left⌈log\left(k-1\right)\right⌉ - 1} {v}_{k - 2}^{′}$. Two lemmas regarding the magnitude of intermediate sums is proved in this decomposition.

First, it is demonstrated that no underflow can happen in format G when adding small numbers to the one with largest exponent.

**Lemma 1:** If *xₗ* is normalised, then $\left|{w}_{i - 1}+{2}^{{e}_{max} - R - c - \left⌈log\left(k-1\right)\right⌉ - 1}{v}_{i - 1}^{′}\right| \geq {2}^{{e}_{max} - c - 1}$ for all *i* = 1, ... , *k'* - 1.

Proof: It is shown by induction that $\left|{w}_{i - 1}+{2}^{{e}_{max} - R - c - \left⌈log\left(k-1\right)\right⌉ - 1}{v}_{i - 1}^{′}\right| \geq {2}^{{e}_{max} - c} - i {2}^{{e}_{max} - c - \left⌈log\left(k-1\right)\right⌉ - 1}$ for all *i* = 1, *... , k' -* 1. Let *i* be an integer between 1 and *k' -* 1. Firstly, $\left|{w}_{i - 1}+{2}^{{e}_{max} - R - c - \left⌈log\left(k-1\right)\right⌉ - 1}{v}_{i - 1}^{′}\right| \geq \left|{w}_{i - 1}\right| - {2}^{{e}_{max} - R - c - \left⌈log\left(k-1\right)\right⌉ - 1} \left|{v}_{i - 1}^{′}\right|$ by triangular inequality. Then, as *i* ≤ *k' -* 1 we have $\left|{x}_{i - 1}^{′}\right| < {2}^{{e}_{max} - c - \left⌈log\left(k-1\right)\right⌉ - 1}$ by hypothesis. Moreover, $\pm {2}^{{e}_{max} - c - \left⌈log\left(k-1\right)\right⌉ - 1}$ are representable in *G*, hence after rounding we have $\left|{2}^{{e}_{max} - R - c - \left⌈log\left(k-1\right)\right⌉ - 1}{v}_{k - 1}^{′}\right| \leq {2}^{{e}_{max} - c - \left⌈log\left(k-1\right)\right⌉ - 1}$.
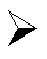 If *i* = 1, then ${w}_{0} = {2}^{{e}_{max} - R - c - \left⌈log\left(k-1\right)\right⌉ - 1} {v}_{k - 1}^{′} = {x}_{l}$ as *xₗ* is representable in *G*, and in turn |*xₗ*| ≥ 2*^{emax-c}* as *xₗ* is normalised.
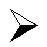 If *i >* 1, then ${w}_{i - 1} = {2}^{{e}_{max} - c} - \left(i-1\right) {2}^{{e}_{max} - c - \left⌈log\left(k-1\right)\right⌉ - 1}$ by induction hypothesis.

In either case, $\left|{w}_{i - 1}+{2}^{{e}_{max} - R - c - \left⌈log\left(k-1\right)\right⌉ - 1}{v}_{i - 1}^{′}\right| \geq {2}^{{e}_{max} - c - 1} - i {2}^{{e}_{max} - c - \left⌈log\left(k-1\right)\right⌉ - 1}$ is obtained, which concludes the induction. As an immediate consequence we have $\left|{w}_{i - 1}+{2}^{{e}_{max} - R - c - \left|log\left(k-1\right)\right| - 1}{v}_{i - 1}^{′}\right| \geq {2}^{{e}_{max} - c - 1} \left(2-i{2}^{- \left⌈log\left(k-1\right)\right⌉}\right) \geq {2}^{{e}_{l} - c - 1} \left(2-\frac{i}{k - 1}\right)$ , so that $\left|{w}_{i - 1}+{2}^{{e}_{max} - R - c - \left⌈log\left(k-1\right)\right⌉ - 1}{v}_{i - 1}^{′}\right| \geq {2}^{{e}_{max} - c - 1}$ for all *i* = 1, ... , *k'* - 1 as *k'* ≤ *k* - 1.

Next, we show that no overflow can happen in format G when adding all other numbers to the one with largest exponent.

**Lemma 2:** If *xₗ* is normalised, then $\left|{w}_{i - 1}+{2}^{{e}_{max} - R - c - \left⌈log\left(k-1\right)\right⌉ - 1}{v}_{i - 1}^{′}\right| \leq {2}^{{e}_{max} - c + \left⌈log\left(k\right)\right⌉ + r - R} - {2}^{{e}_{max} - R - c - \left⌈log\left(k-1\right)\right⌉ - 1}$ for all *i* = 1, ... , *k* - 1.

**Proof:** Remark that |*xᵢ*| ≤ *2^{e^{max-c+r-R}}* - 2*^{e^{max-c-R}}* for all *i* = 0, ... , *k -* 1 as *eₘₐₓ* is the largest input exponent, and in turn ${2}^{{e}_{max} - R - c - \left⌈log\left(k-1\right)\right⌉ - 1} \left|{v}_{i}^{′}\right| \leq {2}^{{e}_{max} - c + r - R} - {2}^{{e}_{max} - c - R}$ as the value ±(2*^{e^{max-c+r-R}} -* 2*^{e^{max-c-R}}*) is also representable in *G*. It follows that $\left|{w}_{i - 1}+{2}^{{e}_{max} - R - c - \left⌈log\left(k-1\right)\right⌉ - 1}{v}_{i - 1}^{′}\right| \leq i \left({2}^{{e}_{max} - c + r - R}-{2}^{{e}_{max} - c - R}\right)$ for all *i* = 1, ... , *k* - 1 by straightforward induction on *i*. In turn $\left|{w}_{i - 1}+{2}^{{e}_{max} - R - c - \left⌈log\left(k-1\right)\right⌉ - 1}{v}_{i - 1}^{′}\right| \leq k \left({2}^{{e}_{max} - c + r - R}-\right.$ $\left.{2}^{{e}_{max} - c - R}\right) \leq {2}^{{e}_{max} - c + \left⌈log\left(k\right)\right⌉ + r - R} - {2}^{{e}_{max} - R - c - \left⌈log\left(k-1\right)\right⌉ - 1}$.

The worst-case precision of the summation of architecture 300 is stated and proved in the following theorem.

**Theorem 1:** For any array *x*₀, ... , *×*_{*k*-1} there exist a pairwise faithfully rounded sum *z* of *x*₀, ... , *×*_{*k*-1} such that applying to architecture 300 a set of multiplication results *x*₀, ... , *×*_{*k*-1} yields an output y such that $\left|y-{\sum }_{i = 0}^{k - 1} {x}_{i}\right| \leq \left|z-{\sum }_{i = 0}^{k - 1} {x}_{i}\right|$.

**Proof:** Consider the sequence *l*₀*,* ... , *l*_{*k*-1} such that *l*₀ = *x'*_{*k*-1} and *lᵢ* is the greatest lower bound of ${l}_{i - 1} + {x}_{i - 1}^{′}$ in *H* for all *i =* 1, ..., *k* - 1, and the sequence *u*₀, ... , *u*_{*k-*1} such that *u*₀ = *xₗ* and *uᵢ* is the least upper bound of ${u}_{i - 1} + {x}_{i - 1}^{′}$ in *H* for all *i =* 1, ... , *k* - 1. These sequences define the pairwise faithfully rounded sums *l*_{*k-*1} and *u*_{*k-*1}, obtained by systematically rounding intermediate sums in the same direction. It is clear that ${l}_{k - 1} \leq {\sum }_{i = 0}^{k - 1} {x}_{i} \leq {u}_{k - 1}$. We claim that *lᵢ* ≤ *wᵢ* ≤ *uᵢ* for all *i* = 0, ..., *k* - 1, so that *l*_{*k*-1} ≤ *y* ≤ *u*_{*k*-1}. This immediately gives us $\left|y-{\sum }_{i = 0}^{k - 1} {x}_{i}\right| \leq \left|z-{\sum }_{i = 0}^{k - 1} {x}_{i}\right|$ for at least one of *z* = *l*_{*k*-1} or *z* = *u*_{*k-*1}.

We now show by induction that *lᵢ* ≤ *wᵢ* ≤ *uᵢ* for all *i =* 0, *..., k -* 1.
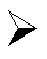 *i =* 0: we have *l*₀ = *u*₀ = *xₗ* by definition and *w*₀ *= xₗ* as *w*₀ ≈ *_{G} x'*_{*k*-1} and *x'*_{*k*-1} is representable in *G*.
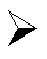 *i* = 1, ..., *k'* - 1: by induction hypothesis we have *l*_{*i*-1} ≤ *w*_{*i-*1} ≤ *u*_{*i-*1}, and in turn ${l}_{i - 1} + {x}_{i - 1}^{′} \leq {w}_{i - 1} + {x}_{i - 1}^{′} \leq {u}_{i - 1} + {x}_{i - 1}^{′}$. Moreover by Lemmas 1 and 2 we have ${2}^{{e}_{max} - c - 1} \leq \left|{w}_{i}\right| \leq {2}^{{e}_{max} - c + \left⌈log\left(k\right)\right⌉ + r - R} - {2}^{{e}_{max} - R - c - \left⌈log\left(k-1\right)\right⌉ - 1}$ so that *G* is finer than F in the neighbourhood of ${w}_{i - 1} + {x}_{i - 1}^{′}$ as for this exponent range *G* accommodates at least the same number of mantissa bits as *H*. Since *G* is a fixed-point format and the sum does not overflow or underflow we also have that rounding ${x}_{i}^{′}$ and then adding the result to *w*_{*i-*1} is equivalent to adding ${x}_{i - 1}^{′}$ to *w*_{*i-*1} and then rounding the result. We have that *lᵢ* is the greatest lower bound of ${l}_{i - 1} + {x}_{i - 1}^{′}$ in *H*, and less or equal to the greatest lower bound of ${l}_{i - 1} + {x}_{i - 1}^{′}$ in *G*. Similarly *uᵢ* is the least upper bound of ${u}_{i - 1} + {x}_{i - 1}^{′}$ in *H*, and greater or equal to the least upper bound of ${u}_{i - 1} + {x}_{i - 1}^{′}$ in *G*. Hence by definition of a faithful rounding we have *lᵢ* ≤ *wᵢ* ≤ *uᵢ*.
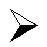 *i = k', k' +* 1, *...,k -* 2: by induction hypothesis we have *l*_{*i*-1} ≤ *w*_{*i-*1} ≤ *u*_{*i-*1}, and in turn ${l}_{i - 1} + {x}_{i - 1}^{′} \leq {w}_{i - 1} + {x}_{i - 1}^{′} \leq {u}_{i - 1} + {x}_{i - 1}^{′}$. Since ${x}_{i}^{′}$ is a large number, it is representable in *G* and following Lemma 2 we have ${w}_{i} = {w}_{i - 1} + {x}_{i - 1}^{′}$. As ${l}_{i} \leq {l}_{i - 1} + {x}_{i - 1}^{′}$ and ${u}_{i} \geq {u}_{i - 1} + {x}_{i - 1}^{′}$ we obtain *lᵢ* ≤ *wᵢ* ≤ *uᵢ*.
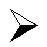 *i = k -* 1: It follows from the induction hypothesis that ${l}_{k - 2} + {x}_{k - 2}^{′} \leq {w}_{k - 2} + {x}_{k - 2}^{′} \leq {u}_{k - 2} + {x}_{k - 2}^{′}$ . Using a similar argument as previously we have either ${w}_{k - 2} + {x}_{i}^{′} = {w}_{k - 2} + {2}^{{e}_{max} - R - c - \left⌈log\left(k-1\right)\right⌉ - 1} {v}_{k - 2}^{′}$ or *G* is finer that *H* in the neighbourhood of ${w}_{k - 2} + {x}_{k - 2}^{′}$ and ${w}_{k - 2} + {x}_{k - 2}^{′} {\approx }_{G} {w}_{k - 2} + {2}^{{e}_{max} - R - c - \left⌈log\left(k-1\right)\right⌉ - 1} {v}_{k - 2}^{′}$. Then from Proposition 1 we obtain ${w}_{k - 1} {\approx }_{H} {w}_{k - 2} + {x}_{k - 2}^{′}$ and in turn *l*_{*k-*1} ≤ *w*_{*k-*1} ≤ *u*_{*k-*1} by definition of a faithful rounding.

Consider a floating-point format H' finer than H, obtained by extending the bit length of H with further mantissa bits at the LSB side or allowing more than R+1 consecutive non-zero bits. Then the worst-case precision of the summation of architecture 300 configured with format H' considering arbitrary rounding directions is at least as high the worst-case precision of the summation of architecture 300 configured with format H considering arbitrary intermediate rounding directions. This is because any value rounded to format H can assume a range at least as wide as the same value rounded to format H'. Hence the range of possible values output of the summation under all possible rounding directions when using format H' are enclosed in the range of values that can be output when using format H.

In a conventional architecture 100 using separate multiplication and addition, each multiplication result is rounded/padded to include P fractional mantissa bits. Hence, after rounding/padding, the output mantissa of a multiplication in a conventional architecture 100 will be of the normalised form and have up to P+1 consecutive non-zero bits. When configured to emulate architecture 100, the multiplication unit 301 as part of architecture 300 produces at least r=P+2 mantissa bits including R=P fractional bits with possibly more than R+1=P+1 consecutive non-zero bits, resulting in a format H' possibly finer than H. Hence every input to the alignment unit 306 is enclosed between the possible rounded values a multiplier in a conventional architecture 100 can produce. It follows that the overall precision of the dot product implementation 300 is enclosed between the smallest and largest possible values considering arbitrary accumulation order and rounding direction in a conventional architecture 100. In other words, it guarantees a pairwise faithfully rounded accuracy.

In a conventional architecture 200 using fused multiplication and addition, each intermediate multiplication result includes the full p+q fractional mantissa bits. Hence the internal mantissa of a multiplication in a conventional architecture 200 will be of the normalised form and have up to p+q+2 consecutive non-zero bits. When configured to emulate architecture 200, the multiplication unit 301 as part of architecture 300 and produces r=max(Q+2,p+q+3) mantissa bits including R=max(Q,p+q) fractional bits with at most R+1=max(Q+1,p+q+2) consecutive non-zero bits, resulting in a format H. Hence every input to the alignment unit 306 holds the same value as the intermediate multiplication result in a conventional architecture 200. It follows that the overall precision of the dot product implementation 300 is enclosed between the smallest and largest possible values considering arbitrary accumulation order and rounding direction in a conventional architecture 200. In other words, it guarantees a triplet-wise faithfully rounded accuracy.

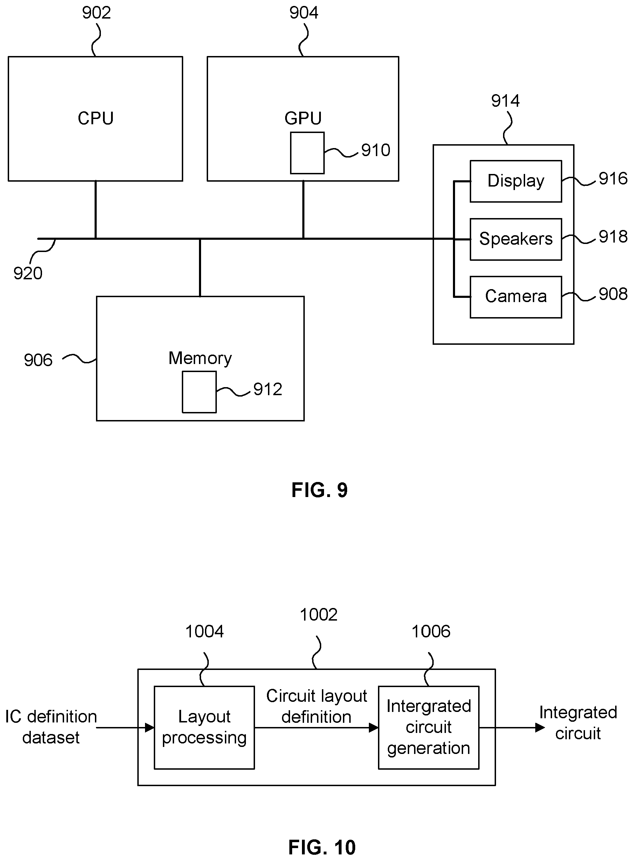

Figure 9 shows a computer system in which the graphics processing systems described herein may be implemented. The computer system comprises a CPU 902, a GPU 904, a memory 906 and other devices 914, such as a display 916, speakers 918 and a camera 908. A processing block 910 (corresponding to processing blocks 110) is implemented on the GPU 904. In other examples, the processing block 910 may be implemented on the CPU 902. The components of the computer system can communicate with each other via a communications bus 920. A store 912 (corresponding to store 112) is implemented as part of the memory 906.

While Fig. 9 illustrates the implementation of a graphics processing system, it will be understood that a similar block diagram could be drawn for an artificial intelligence accelerator system - for example, by replacing the GPU 904 with a Neural Network Accelerator (NNA), or adding the NNA as an additional unit. In such cases, the architecture 300 of the adder can be implemented in the NNA.

The adder described herein may be embodied in hardware on an integrated circuit. Generally, any of the functions, methods, techniques, or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block, or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language, or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset (which may also be referred to as a hardware design) that when processed (i.e. run) in an integrated circuit manufacturing system configures the system to manufacture a computing device comprising any apparatus described herein. An integrated circuit definition dataset may be, for example, an integrated circuit description.

Therefore, there may be provided a method of manufacturing, at an integrated circuit manufacturing system, an architecture of adder as described herein. Furthermore, there may be provided an integrated circuit definition dataset that, when processed in an integrated circuit manufacturing system, causes the method of manufacturing an adder to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset (e.g. a hardware design) at an integrated circuit manufacturing system so as to configure the system to manufacture an adder will now be described with respect to Figure 10.

Figure 10 shows an example of an integrated circuit (IC) manufacturing system 1002 which is configured to manufacture an adder as described in any of the examples herein. In particular, the IC manufacturing system 1002 comprises a layout processing system 1004 and an integrated circuit generation system 1006. The IC manufacturing system 1002 is configured to receive an IC definition dataset/ hardware design (e.g. defining an adder as described in any of the examples herein), process the IC definition dataset, and generate an IC according to the IC definition dataset (e.g. which embodies an adder as described in any of the examples herein). The processing of the IC definition dataset configures the IC manufacturing system 1002 to manufacture an integrated circuit embodying an adder as described in any of the examples herein.

The layout processing system 1004 is configured to receive and process the IC definition dataset/ hardware design to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an adder without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset/ hardware design, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset/ hardware design to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of performing dot product of an array of '2k' floating point numbers, k ≥ 3, using a hardware implementation, the array comprising a first set of k floating-point numbers a₀, a₁..., aₖ₋₁, and a second set of k floating-point numbers b₀, b₁..., bₖ₋₁, wherein the method comprises:
receiving both sets of 'k' floating point numbers;
performing mantissa multiplication of the mantissa of each floating point number aᵢ with the mantissa of a floating point number bᵢ to generate k product numbers (zᵢ), each product number (zᵢ) having a bit length of 'r+ log (k-1) +1' bits, where r is an integer;
creating a set of 'k' numbers (yᵢ) based on the k product numbers (zᵢ), the numbers (yᵢ) having a bit-length of 'n' bits obtained by adding at least extra most-significant bits to the bit length of the product numbers (zᵢ), wherein the 'n' bits comprises a number of magnitude bits, wherein 'n' is $r + \left⌈{log}_{2}\left(k\right)\right⌉ + \left⌈{log}_{2}\left(k-1\right)\right⌉ + x$ bits, where x is an integer, and x ≥ 1;
identifying a maximum exponent sum (eₘₐₓ) among k exponent sums (eabᵢ), each exponent sum is the sum of exponents of the floating point number aᵢ and the floating point number bᵢ;
aligning the magnitude bits of the numbers (yᵢ) based on the maximum exponent sum (eₘₐₓ); and
adding the set of 'k' numbers concurrently.

2. The method as claimed in claim 1, wherein each number in the first set of k floating-point numbers a₀, a₁..., aₖ₋₁ comprises a mantissa (maᵢ) and an exponent (eaᵢ) and each number in the second set of k floating-point numbers b₀, b₁..., bₖ₋₁ comprises a mantissa (mbᵢ) and an exponent (ebᵢ), where each mantissa (maᵢ) is having a bit length of 'p' bits and each mantissa (mbᵢ) is having a bit length of 'q' bits.

3. The method as claimed in claim 2, wherein performing mantissa multiplication comprises multiplying mantissa (maᵢ) and mantissa (mbᵢ) to obtain an intermediate mantissa product (mabᵢ).

4. The method as claimed in claims 1 to 3, wherein the method of performing a dot product emulates the precision obtained using separate multiplication and addition units for performing dot product having an output mantissa bit length of P bits by setting the value of 'r' bits as 'r= P+1-log(k-1)'.

5. The method as claimed in claim 3, wherein generating k product numbers (zᵢ) having the bit length of 'r+ log (k-1) +1' bits comprises:
rounding, the bits of the intermediate mantissa product (mabᵢ) to r+ log (k-1) +1 bits, if p+q+2>r+ log (k-1) +1 bits; or
padding, extra least-significant bits to the bit length of the intermediate mantissa product (mabᵢ) to generate r+ log (k-1) +1 bits, if p+q+2 < r+ log (k-1) +1 bits.

6. The method as claimed in any preceding claim, wherein identifying a maximum exponent sum (eₘₐₓ) includes identifying the maximum value among k exponent sums (eabᵢ) where k exponent sums (eabᵢ) is obtained by summing exponent (eaᵢ) and exponent (ebᵢ).

7. The method as claimed in any preceding claim, wherein:
adding extra most-significant bits to the bit length 'r+ log (k-1) +1' of the product numbers (zᵢ) comprises adding at least $\left⌈{log}_{2}\left(k\right)\right⌉$ number of the most-significant bits; and/or
adding at least extra most-significant bits to the bit length of the product numbers (zi) further comprises adding one or more least-significant bits to the bit length of the product numbers (zᵢ).

8. The method as claimed in any preceding claim, wherein the method further comprises:
calculating an output value by processing 'k' numbers (yᵢ);
renormalizing the output value; and
rounding the output value to represent the output value as a floating-point number.

9. The method as claimed in in any preceding claim, wherein aligning the magnitude bits of the numbers (yᵢ) to be based on the maximum exponent (eₘₐₓ) comprises the steps of, for each floating-point number (i):
calculating the difference (e_{d}) between the maximum exponent sum (eₘₐₓ) and each exponent sum (eabᵢ); and
shifting the magnitude bits of the corresponding number (yᵢ), to the LSB side, based on the calculated difference (e_{d});
and optionally wherein the method further comprises either:
further to shifting the magnitude bits of the numbers, the method further comprises performing rounding or truncating the bits of the numbers that are shifted outside the bit-length of the number, or
determining a two's complement of the magnitude bits of the numbers, based on a sign bit (sᵢ) of each corresponding number, if the set of 'k' floating point numbers comprises signed floating-point numbers.

10. A hardware implementation for performing dot product of an array of '2k' floating point numbers, k ≥ 3, the array comprising a first set of k floating-point numbers a₀, a₁..., aₖ₋₁, and a second set of k floating-point numbers b₀, b₁..., bₖ₋₁, wherein the hardware implementation comprises:
a multiplication unit comprising a plurality of multiplier configured to:
receive both sets of 'k' floating point numbers;
perform mantissa multiplication of mantissa of each floating point number aᵢ with the mantissa of a floating point number bᵢ to generate k product numbers (zᵢ), each product number (zᵢ) having a bit length of 'r+ log (k-1) +1' bits, where r is an integer;
a format conversion unit configured to:
create a set of 'k' numbers (yᵢ) based on the k product numbers (zᵢ), the numbers (yᵢ) having a bit-length of 'n' bits obtained by adding at least extra most-significant bits to the bit length of the product numbers (zᵢ), wherein the 'n' bits comprises a number of magnitude bits, wherein 'n' is $r + \left⌈{log}_{2}\left(k\right)\right⌉ + \left⌈{log}_{2}\left(k-1\right)\right⌉ + x$ bits, where x is an integer, and x ≥ 2;
a maximum exponent detection unit configured to identify a maximum exponent sum (eₘₐₓ) among k exponent sums (eabᵢ), each exponent sum is the sum of exponents of the floating point number aᵢ and the floating point number bᵢ;
an alignment unit configured to align the magnitude bits of the numbers based on the maximum exponent sum (eₘₐₓ); and
a processing unit configured to add the set of 'k' numbers concurrently to generate an output value.

11. The hardware implementation as claimed in claim 10, further comprising a renormalizing unit configured to:
renormalize the output value; and
round the output value to represent the output value as a floating-point number.

12. A method of performing dot product of an array of '2k' floating point numbers, k ≥ 3, using a hardware implementation, the array comprising a first set of k floating-point numbers a₀, a₁..., aₖ₋₁, and a second set of k floating-point numbers b₀, b₁...,bₖ₋₁, wherein the method comprises:
receiving both sets of 'k' floating point numbers;
performing mantissa multiplication of the mantissa of each floating point number aᵢ with the mantissa of a floating point number bᵢ, each multiplication generating a first intermediate product number (zᵢ') and a second intermediate product number (zᵢ"), thereby generating 2k product numbers comprising k first intermediate product numbers (zᵢ') and k second intermediate product numbers (zᵢ"), each having a bit length of 'r+ log (k-1) +2' bits, where r is an integer;
creating a set of '2k' numbers comprising k first numbers (yᵢ') and k second numbers (yᵢ"), based on the 2k product numbers, each having a bit-length of 'n' bits obtained by adding extra most-significant bits to the bit length of the intermediate product numbers (zᵢ' and zᵢ"), wherein the 'n' bits comprises a number of magnitude bits, wherein 'n' is $r + 1 + \left⌈{log}_{2}\left(k\right)\right⌉ + \left⌈{log}_{2}\left(k-1\right)\right⌉ + x$ bits, where x is an integer, and x ≥ 1;
identifying a maximum exponent sum (eₘₐₓ) among k exponent sums (eabᵢ), each exponent sum is the sum of exponents of the floating point number aᵢ and the floating point number bᵢ;
aligning the magnitude bits of the numbers (yᵢ' and yᵢ") based on the maximum exponent sum (eₘₐₓ); and
adding the set of '2k' numbers concurrently.

13. A hardware implementation for performing dot product of an array of '2k' floating point numbers, k ≥ 3, the array comprising a first set of k floating-point numbers a₀, a₁..., aₖ₋₁, and a second set of k floating-point numbers b₀, b₁..., bₖ₋₁, wherein the hardware implementation comprises:
a multiplication unit comprising a plurality of multipliers configured to:
receive both sets of 'k' floating point numbers;
perform mantissa multiplication of the mantissa of each floating point number aᵢ with the mantissa of a floating point number bᵢ , each multiplication generating a first intermediate product number (zᵢ') and a second intermediate product number (zᵢ"), thereby generating 2k product numbers comprising k first intermediate product numbers (zᵢ') and k second intermediate product numbers (zᵢ"), each having a bit length of 'r+ log (k-1) +2' bits, where r is an integer;
a format conversion unit configured to:
create a set of '2k' numbers comprising k first numbers (yᵢ') and k second numbers (yᵢ"), based on the 2k product numbers, each having a bit-length of 'n' bits obtained by adding extra most-significant bits to the bit length of the intermediate product numbers (zᵢ' and zᵢ"), wherein the 'n' bits comprises a number of magnitude bits, wherein 'n' is $r + 1 + \left⌈{log}_{2}\left(k\right)\right⌉ + \left⌈{log}_{2}\left(k-1\right)\right⌉ + x$ bits, where x is an integer, and x ≥ 1;
a maximum exponent detection unit configured to identify a maximum exponent sum (eₘₐₓ) among k exponent sums (eabᵢ), each exponent sum is the sum of exponents of the floating point number aᵢ and the floating point number bᵢ;
an alignment unit configured to align the magnitude bits of the numbers (yᵢ' and yᵢ") based on the maximum exponent sum (eₘₐₓ); and
a processing unit configured to add the set of '2k' numbers concurrently to generate an output value.

14. An integrated circuit definition dataset that, when processed in an integrated circuit manufacturing system, configures the integrated circuit manufacturing system to manufacture the hardware implementation of any of claims 10, 11 or 13.

15. A non-transitory computer readable storage medium having stored thereon a computer readable description of a hardware implementation as claimed in any of claims 10, 11 or 13 that, when processed in an integrated circuit manufacturing system, causes the integrated circuit manufacturing system to manufacture an integrated circuit embodying the hardware implementation.

## Patentansprüche

1. Verfahren zum Durchführen eines Punktprodukts eines Arrays von ,2k' Gleitkommazahlen, k ≥ 3, unter Verwendung einer Hardwareimplementierung, wobei das Array einen ersten Satz von k Gleitkommazahlen a₀, a₁..., aₖ₋₁ und einen zweiten Satz von k Gleitkommazahlen b₀, b₁..., bₖ₋₁ umfasst, wobei das Verfahren umfasst:
Empfangen beider Sätze von ,k' Gleitkommazahlen;
Durchführen von Mantissenmultiplikation der Mantisse jeder Gleitkommazahl aᵢ mit der Mantisse einer Gleitkommazahl bᵢ, um k Produktzahlen (zᵢ) zu erzeugen, wobei jede Produktzahl (zᵢ) eine Bitlänge von 'r+ log (k-1) +1' Bit aufweist, wobei r eine ganze Zahl ist;
Erzeugen eines Satzes von ,k' Zahlen (yᵢ) basierend auf den k Produktzahlen (zᵢ), wobei die Zahlen (yᵢ) eine Bitlänge von ,n' Bit aufweisen, die dadurch erhalten wird, dass mindestens höchstwertige Bits zu der Bitlänge der Produktzahlen (zᵢ) addiert werden, wobei die ,n' Bits eine Anzahl von Größenbits umfassen, wobei ,n' $r + \left⌈{log}_{2}\left(k\right)\right⌉ + \left⌈{log}_{2}\left(k-1\right)\right⌉ + x$ Bit ist, wobei x eine ganze Zahl ist und x ≥ 1;
Identifizieren einer maximalen Exponentensumme (eₘₐₓ) unter k Exponentensummen (eabᵢ), wobei jede Exponentensumme die Summe der Exponenten der Gleitkommazahl aᵢ und der Gleitkommazahl bᵢ ist;
Ausrichten der Größenbits der Zahlen (yᵢ) basierend auf der maximalen Exponentensumme (eₘₐₓ); und
gleichzeitiges Addieren des Satzes von ,k' Zahlen.

2. Verfahren nach Anspruch 1, wobei jede Zahl in dem ersten Satz von k Gleitkommazahlen a₀, a₁..., aₖ₋₁ eine Mantisse (maᵢ) und einen Exponenten (eaᵢ) umfasst und jede Zahl in dem zweiten Satz von k Gleitkommazahlen b₀, b₁..., bₖ₋₁ eine Mantisse (mbᵢ) und einen Exponenten (ebᵢ) umfasst, wobei jede Mantisse (maᵢ) eine Bitlänge von ,p' Bit aufweist und jede Mantisse (mbᵢ) eine Bitlänge von ,q' Bit aufweist.

3. Verfahren nach Anspruch 2, wobei das Durchführen von Mantissenmultiplikation ein Multiplizieren der Mantisse (maᵢ) und der Mantisse (mbᵢ) umfasst, um ein Zwischenmantissenprodukt (mabᵢ) zu erhalten.

4. Verfahren nach einem der Ansprüche 1 bis 3, wobei das Verfahren zum Durchführen eines Punktprodukts die unter Verwendung von separaten Multiplikations- und Additionseinheiten erhaltene Genauigkeit zum Durchführen eines Punktprodukts mit einer Ausgabemantissenbitlänge von P Bits durch Einstellen des Wertes von ,r' Bits als ,r= P+1-log(k-1)' emuliert.

5. Verfahren nach Anspruch 3, wobei das Erzeugen von k Produktzahlen (zᵢ) mit der Bitlänge von ,r+ log (k-1) +1' Bit Folgendes umfasst:
Runden der Bits des Zwischenmantissenprodukts (mabᵢ) auf r+ log (k-1) +1 Bits, wenn p+q+2 > r+ log (k-1) +1 Bit; oder
Hinzufügen von zusätzlichen niedrigstwertigen Bits zu der Bitlänge des Zwischenmantissenprodukts (mabᵢ), um r+ log (k-1) +1 Bits zu erzeugen, wenn p+q+2 < r+ log (k-1) +1 Bits.

6. Verfahren nach einem der vorhergehenden Ansprüche, wobei das Identifizieren einer maximalen Exponentensumme (eₘₐₓ) ein Identifizieren des Maximalwerts unter k Exponentensummen (eabᵢ) umfasst, wobei k Exponentensummen (eabᵢ) durch Summieren von Exponenten (eaᵢ) und Exponenten (ebᵢ) erhalten werden.

7. Verfahren nach einem der vorhergehenden Ansprüche, wobei:
das Addieren von zusätzlichen höchstwertigen Bits zu der Bitlänge ,r+ log (k-1) +1' der Produktzahlen (zᵢ) ein Addieren von mindestens $\left⌈{log}_{2}\left(k\right)\right⌉$ der höchstwertigen Bits umfasst; und/oder
wobei Addieren von mindestens zusätzlichen höchstwertigen Bits zu der Bitlänge der Produktzahlen (zi) ein Addieren von einem oder mehreren niedrigstwertigen Bits zu der Bitlänge der Produktzahlen (zᵢ) umfasst.

8. Verfahren nach einem der vorhergehenden Ansprüche, wobei das Verfahren ferner umfasst:
Berechnen eines Ausgabewerts durch Verarbeiten von ,k' Zahlen (yᵢ);
Renormieren des Ausgabewerts; und
Runden des Ausgabewerts, um den Ausgabewert als Gleitkommazahl darzustellen.

9. Verfahren nach einem der vorhergehenden Ansprüche, wobei das Ausrichten der Größenbits der Zahlen (yᵢ), die auf dem maximalen Exponenten (eₘₐₓ) zu basieren sind, für jede Gleitkommazahl (i) die folgenden Schritte umfasst:
Berechnen der Differenz (e_{d}) zwischen der maximalen Exponentensumme (eₘₐₓ) und jeder Exponentensumme (eabᵢ); und
Verschieben der Größenbits der entsprechenden Zahl (yᵢ) auf die LSB-Seite basierend auf der berechneten Differenz (e_{d});
und wobei das Verfahren optional ferner umfasst, entweder:
zusätzlich zu dem Verschieben der Größenbits der Zahlen, das Verfahren ferner umfassend das Runden oder das Abschneiden der Bits der Zahlen, die außerhalb der Bitlänge der Zahl verschoben werden, oder
Ermitteln eines Zweierkomplements der Größenbits der Zahlen, basierend auf einem Vorzeichenbit (sᵢ) jeder entsprechenden Zahl, wenn der Satz von ,k' Gleitkommazahlen vorzeichenbehaftete Gleitkommazahlen umfasst.

10. Hardwareimplementierung zum Durchführen eines Punktprodukts eines Arrays von ,2k' Gleitkommazahlen, k ≥ 3, wobei das Array einen ersten Satz von k Gleitkommazahlen a₀, a₁..., aₖ₋₁ und einen zweiten Satz von k Gleitkommazahlen b₀, b₁..., bₖ₋₁ umfasst, wobei die Hardwareimplementierung umfasst:
eine Multiplikationseinheit, die eine Vielzahl von Multiplizierern umfasst, konfiguriert zum:
Empfangen beider Sätze von ,k' Gleitkommazahlen;
Durchführen einer Mantissenmultiplikation der Mantisse jeder Gleitkommazahl aᵢ mit der Mantisse einer Gleitkommazahl bᵢ, um k Produktzahlen (zᵢ) zu erzeugen, wobei jede Produktzahl (zᵢ) eine Bitlänge von ,r+ log (k-1) +1' Bits aufweist, wobei r eine ganze Zahl ist;
eine Formatkonvertierungseinheit, konfiguriert zum:
Erstellen eines Satzes von ,k' Zahlen (yᵢ) basierend auf den k Produktzahlen (zᵢ), wobei die Zahlen (yᵢ) eine Bitlänge von ,n' Bits aufweisen, die durch Addieren von mindestens zusätzlichen höchstwertigen Bits zu der Bitlänge der Produktzahlen (zᵢ) erhalten wird, wobei die ,n' Bits eine Anzahl von Größenbits umfassen, wobei ,n' $r + \left⌈{log}_{2}\left(k\right)\right⌉ + \left⌈{log}_{2}\left(k-1\right)\right⌉ + x$ Bits ist, wobei x eine ganze Zahl ist und x ≥ 2;
eine Einheit zur Detektion maximaler Exponenten, die konfiguriert ist, eine maximale Exponentensumme (eₘₐₓ) unter k Exponentensummen (eabᵢ) zu identifizieren, wobei jede Exponentensumme die Summe der Exponenten der Gleitkommazahl aᵢ und der Gleitkommazahl bᵢ ist;
eine Ausrichtungseinheit, die zum Ausrichten der Größenbits der Zahlen basierend auf der maximalen Exponentensumme (eₘₐₓ) konfiguriert ist; und
eine Verarbeitungseinheit, die zum gleichzeitigen Addieren des Satzes von ,k' Zahlen konfiguriert ist, um einen Ausgabewert zu erzeugen.

11. Hardwareimplementierung nach Anspruch 10, ferner umfassend eine Renormierungseinheit, die konfiguriert ist zum:
Renormieren des Ausgabewerts; und
Runden des Ausgabewerts, um den Ausgabewert als Gleitkommazahl darzustellen.

12. Verfahren zum Durchführen eines Punktprodukts eines Arrays von ,2k' Gleitkommazahlen, k ≥ 3, unter Verwendung einer Hardwareimplementierung, wobei das Array einen ersten Satz von k Gleitkommazahlen a₀, a₁..., aₖ₋₁ und einen zweiten Satz von k Gleitkommazahlen b₀, b₁..., bₖ₋₁ umfasst, wobei das Verfahren umfasst:
Empfangen beider Sätze von ,k' Gleitkommazahlen;
Durchführen einer Mantissenmultiplikation der Mantisse jeder Gleitkommazahl aᵢ mit der Mantisse einer Gleitkommazahl bᵢ, wobei jede Multiplikation eine erste Zwischenproduktzahl (zᵢ') und eine zweite Zwischenproduktzahl (zᵢ'') erzeugt, wodurch 2k Produktzahlen erzeugt werden, die k erste Zwischenproduktzahlen (zᵢ') und k zweite Zwischenproduktzahlen (zᵢ") umfassen, die jeweils eine Bitlänge von ,r+ log (k-1) +2' Bits aufweisen, wobei r eine ganze Zahl ist;
Erzeugen eines Satzes von ,2k' Zahlen, umfassend k erste Zahlen (yᵢ') und k zweite Zahlen (yᵢ''), basierend auf den 2k Produktzahlen, die jeweils eine Bitlänge von ,n' Bits aufweisen, die durch Addieren von zusätzlichen höchstwertigen Bits zu der Bitlänge der Zwischenproduktzahlen (zᵢ'und zᵢ'') erhalten werden, wobei die ,n' Bits eine Anzahl von Größenbits umfassen, wobei ,n' $r + 1 + \left⌈{log}_{2}\left(k\right)\right⌉ + \left⌈{log}_{2}\left(k-1\right)\right⌉ + x$ ist, wobei x eine ganze Zahl ist und x ≥ 1;
Identifizieren einer maximalen Exponentensumme (eₘₐₓ) unter k Exponentensummen (eabᵢ), wobei jede Exponentensumme die Summe der Exponenten der Gleitkommazahl aᵢ und der Gleitkommazahl bᵢ ist;
Ausrichten der Größenbits der Zahlen (yᵢ' und yᵢ") basierend auf der maximalen Exponentensumme (eₘₐₓ); und
gleichzeitiges Addieren des Satzes von ,2k' Zahlen.

13. Hardwareimplementierung zum Durchführen eines Punktprodukts eines Arrays von ,2k' Gleitkommazahlen, k ≥ 3, wobei das Array einen ersten Satz von k Gleitkommazahlen a₀, a₁..., aₖ₋₁ und einen zweiten Satz von k Gleitkommazahlen b₀, b₁..., bₖ₋₁ umfasst, wobei die Hardwareimplementierung umfasst:
eine Multiplikationseinheit, die eine Vielzahl von Multiplizierern umfasst, konfiguriert zum:
Empfangen beider Sätze von ,k' Gleitkommazahlen;
Durchführen einer Mantissenmultiplikation der Mantisse jeder Gleitkommazahl aᵢ mit der Mantisse einer Gleitkommazahl bᵢ, wobei jede Multiplikation eine erste Zwischenproduktzahl (zᵢ') und eine zweite Zwischenproduktzahl (zᵢ") erzeugt, wodurch 2k Produktzahlen erzeugt werden, die k erste Zwischenproduktzahlen (zᵢ') und k zweite Zwischenproduktzahlen (zᵢ") umfassen, die jeweils eine Bitlänge von ,r+ log (k-1) +2' Bits aufweisen, wobei r eine ganze Zahl ist;
eine Formatkonvertierungseinheit, konfiguriert zum:
Erzeugen eines Satzes von ,2k' Zahlen, umfassend k erste Zahlen (yᵢ') und k zweite Zahlen (yᵢ''), basierend auf den 2k Produktzahlen, die jeweils eine Bitlänge von ,n' Bits haben, die durch Addieren von zusätzlichen höchstwertigen Bits zu der Bitlänge der Zwischenproduktzahlen (zᵢ' und zᵢ'') erhalten werden, wobei die ,n' Bits eine Anzahl von Größenbits umfassen, wobei ,n' $r + 1 + \left⌈{log}_{2}\left(k\right)\right⌉ + \left⌈{log}_{2}\left(k-1\right)\right⌉ + x$ Bits ist, wobei x eine ganze Zahl ist und x ≥ 1;
eine Einheit zur Detektion maximaler Exponenten, die konfiguriert ist, eine maximale Exponentensumme (eₘₐₓ) unter k Exponentensummen (eabᵢ) zu identifizieren, wobei jede Exponentensumme die Summe der Exponenten der Gleitkommazahl aᵢ und der Gleitkommazahl bᵢ ist;
eine Ausrichtungseinheit, die zum Ausrichten der Größenbits der Zahlen (yᵢ' und yᵢ") basierend auf der maximalen Exponentensumme (eₘₐₓ) konfiguriert ist; und
eine Verarbeitungseinheit, die zum gleichzeitigen Addieren des Satzes von ,2k' Zahlen konfiguriert ist, um einen Ausgabewert zu erzeugen.

14. Definitionsdatensatz für integrierte Schaltungen, der, wenn er in einem Herstellungssystem für integrierte Schaltungen verarbeitet wird, das Herstellungssystem für integrierte Schaltungen einrichtet, um eine Hardwareimplementierung nach einem der Ansprüche 10, 11 oder 13 herzustellen.

15. Nicht flüchtiges computerlesbares Speichermedium, auf dem eine computerlesbare Beschreibung einer Hardwareimplementierung nach einem der Ansprüche 10, 11 oder 13 gespeichert ist, die, wenn diese in einem Herstellungssystem für integrierte Schaltungen verarbeitet wird, das Herstellungssystem für integrierte Schaltungen veranlasst, eine integrierte Schaltung herzustellen, die die Hardware-Implementierung verkörpert.

## Revendications

1. Procédé de réalisation d'un produit scalaire d'un tableau de « 2k » nombres à virgule flottante, k ≥ 3, en utilisant une implémentation matérielle, le tableau comprenant un premier ensemble de k nombres à virgule flottante a₀, a₁..., aₖ₋₁, et un deuxième ensemble de k nombres à virgule flottante b₀, b₁..., bₖ₋₁, dans lequel le procédé comprend :
la réception des deux ensembles de k nombres à virgule flottante ;
la réalisation d'une multiplication de mantisses de la mantisse de chaque nombre à virgule flottante aᵢ avec la mantisse d'un nombre à virgule flottante bᵢ pour générer k nombres produits (zᵢ), chaque nombre produit (zᵢ) ayant une longueur binaire de « r+ log (k-1) +1 » bits dans lequel r est un entier ;
la création d'un ensemble de « k » nombres (yᵢ) sur la base des k nombres produits (zᵢ), les nombres (yᵢ) ayant une longueur binaire de « n » bits obtenue en additionnant au moins à la fois des bits les plus significatifs supplémentaires à la longueur binaire des nombres produits (zi), dans lequel les « n » bits comprennent un nombre de bits d'amplitude, dans lequel « n » est $r + \left⌈{log}_{2}\left(k\right)\right⌉ + \left⌈{log}_{2}\left(k-1\right)\right⌉ + x$ bits, où x est un entier, et x ≥ 1 ;
l'identification d'une somme d'exposants maximale (eₘₐₓ) parmi k sommes d'exposants (eabᵢ), chaque somme d'exposants étant la somme des exposants du nombre à virgule flottante aᵢ et du nombre à virgule flottante bᵢ ;
l'alignement des bits d'amplitude des nombres (yᵢ) sur la base de la somme d'exposants maximale (eₘₐₓ) ; et
l'addition simultanée de l'ensemble de « k » nombres.

2. Procédé selon la revendication 1, dans lequel chaque nombre du premier ensemble de k nombres à virgule flottante a₀, a₁..., aₖ₋₁ comprend une mantisse (maᵢ) et un exposant (eaᵢ) et chaque nombre du deuxième ensemble de k nombres à virgule flottante b₀, b₁..., bₖ₋₁ comprend une mantisse (mbᵢ) et un exposant (ebᵢ), où chaque mantisse (maᵢ) a une longueur de « p » bits et chaque mantisse (mbᵢ) a une longueur de « q » bits.

3. Procédé selon la revendication 2, dans lequel la réalisation d'une multiplication de mantisses comprend la multiplication de la mantisse (maᵢ) et de la mantisse (mbᵢ) pour obtenir un produit de mantisses intermédiaire (mabᵢ).

4. Procédé selon les revendications 1 à 3, dans lequel le procédé d'exécution d'un produit scalaire émule la précision obtenue en utilisant des unités de multiplication et d'addition séparées pour exécuter un produit scalaire ayant une longueur de bit de mantisse de sortie de P bits en fixant la valeur de « r » bits comme « r= P+1-log(k-1) ».

5. Procédé selon la revendication 3, dans lequel la génération de k nombres de produit (zᵢ) ayant la longueur de bit de « r+ log (k-1) +1 » bits comprend :
l'arrondissement, des bits du produit de mantisse intermédiaire (mabᵢ) à r+ log (k-1) +1 bits, si p+q+2 > r+ log (k-1) +1 bits ; ou
le remplissage de bits de poids le plus faible à la longueur binaire du produit de mantisse intermédiaire (mabᵢ) pour générer r+ log (k-1) +1 bits, si p+q+2 < r+ log (k-1) +1 bits.

6. Procédé selon l'une quelconque des revendications précédentes dans lequel l'identification d'une somme d'exposants maximale (eₘₐₓ) comporte l'identification de la valeur maximale parmi k sommes d'exposants (eabᵢ) où k sommes d'exposants (eabᵢ) sont obtenues en faisant la somme de l'exposant (eaᵢ) et de l'exposant (ebᵢ).

7. Procédé selon une quelconque revendication précédente, dans lequel :
l'addition de bits les plus significatifs supplémentaires à la longueur binaire « r+ log (k-1) +1 » des nombres produits (zᵢ) comprend l'addition d'un nombre égal à au moins $\left⌈{log}_{2}\left(k\right)\right⌉$ bits les plus significatifs ; et/ou
l'addition au moins des bits les plus significatifs supplémentaires à la longueur binaire des nombres produits (zᵢ) comprend en outre l'addition d'un ou plusieurs bits de poids faible à la longueur en bits des nombres produits (zᵢ).

8. Procédé selon une quelconque revendication précédente, dans lequel le procédé comprend en outre :
le calcul d'une valeur de sortie par traitement des « k » nombres (yᵢ) ;
la renormalisation de la valeur de sortie ; et
l'arrondissement de la valeur de sortie pour représenter la valeur de sortie sous la forme d'un nombre à virgule flottante.

9. Procédé selon une quelconque revendication précédente, dans lequel l'alignement des bits d'amplitude des nombres (yᵢ) à baser sur l'exposant maximal (eₘₐₓ) comprend les étapes consistant à, pour chaque nombre à virgule flottante (i) :
calculer la différence (e_{d}) entre la somme d'exposants maximale (eₘₐₓ) et chaque somme d'exposants (eabᵢ) ; et
décaler les bits d'amplitude du nombre (yᵢ) correspondant, vers le côté LSB, sur la base de la différence (e_{d}) calculée ;
et facultativement dans lequel le procédé comprend en outre soit :
en plus du décalage des bits de valeur absolue des nombres, le procédé comprend en outre l'exécution de l'arrondi ou de la troncature des bits des nombres qui sont décalés en dehors de la longueur binaire du nombre, ou
la détermination d'un complément à deux des bits d'amplitude des nombres, sur la base d'un bit de signe (sᵢ) de chaque nombre correspondant, si l'ensemble de « k » nombres à virgule flottante comprend des nombres à virgule flottante signés.

10. Implémentation matérielle pour la réalisation d'un produit scalaire d'un tableau de « 2k » nombres à virgule flottante, k ≥ 3, le tableau comprenant un premier ensemble de k nombres à virgule flottante a₀, a₁..., aₖ₋₁, et un deuxième ensemble de k nombres à virgule flottante b₀, b₁..., bₖ₋₁, dans laquelle l'implémentation matérielle comprend :
une unité de multiplication comprenant une pluralité de multiplicateurs configurés pour :
recevoir les deux ensembles de « k » nombres à virgule flottante ;
réaliser une multiplication de mantisses de la mantisse de chaque nombre à virgule flottante aᵢ avec la mantisse d'un nombre à virgule flottante bᵢ pour générer k nombres produits (zᵢ), chaque nombre produit (zᵢ) ayant une longueur binaire de « r+ log (k-1) +1 » bits dans lequel r est un entier ;
une unité de conversion de format configurée pour :
créer un ensemble de « k » nombres (yᵢ) sur la base des k nombres produits (zᵢ), les nombres (yᵢ) ayant une longueur binaire de « n » bits obtenue en additionnant au moins à la fois des bits les plus significatifs supplémentaires à la longueur binaire « r » des nombres produits (zᵢ), dans lequel les « n » bits comprennent un nombre de bits d'amplitude, dans lequel « n » est $r + \left⌈{log}_{2}\left(k\right)\right⌉ + \left⌈{log}_{2}\left(k-1\right)\right⌉ + x$ bits, où x est un entier, et x ≥ 2 ;
une unité de détection d'exposant maximal configurée pour identifier une somme d'exposants maximale (eₘₐₓ) parmi k sommes d'exposants (eabᵢ), chaque somme d'exposants étant la somme des exposants du nombre à virgule flottante aᵢ et du nombre à virgule flottante bᵢ ;
une unité d'alignement configurée pour aligner les bits d'amplitude des nombres sur la base de la somme d'exposants maximale (eₘₐₓ) ; et
une unité de traitement configurée pour additionner l'ensemble de « k » nombres simultanément afin de générer une valeur de sortie.

11. Implémentation matérielle selon la revendication 10, comprenant en outre une unité de renormalisation configurée pour :
renormaliser la valeur de sortie ; et
arrondir la valeur de sortie pour représenter la valeur de sortie sous la forme d'un nombre à virgule flottante.

12. Procédé de réalisation d'un produit scalaire d'un tableau de « 2k » nombres à virgule flottante, k ≥ 3, en utilisant une implémentation matérielle, le tableau comprenant un premier ensemble de k nombres à virgule flottante a₀, a₁..., aₖ₋₁, et un deuxième ensemble de k nombres à virgule flottante b₀, b₁..., bₖ₋₁, dans lequel le procédé comprend :
la réception des deux ensembles de k nombres à virgule flottante ;
la réalisation d'une multiplication des mantisses de la mantisse de chaque nombre à virgule flottante aᵢ avec la mantisse d'un nombre à virgule flottante bᵢ, chaque multiplication générant un premier nombre produit intermédiaire (zᵢ') et un deuxième nombre produit intermédiaire (zᵢ"), générant ainsi 2k nombres produits comprenant k premiers nombres produits intermédiaires (zᵢ') et k deuxièmes nombres produits intermédiaires (zᵢ''), chacun ayant une longueur binaire de « r+ log (k-1) +2 » bits, dans lequel r est un entier ;
la création d'un ensemble de « 2k » nombres comprenant k premiers nombres (yᵢ') et k deuxièmes nombres (yᵢ''), sur la base des 2k nombres de produits, chacun ayant une longueur de bits de « n » bits obtenue en ajoutant des bits de poids fort supplémentaires à la longueur de bits des nombres de produits intermédiaires (zᵢ' et zᵢ'' bits) où les « n » bits comprennent un nombre de bits de grandeur, où « n » est $r + 1 + \left⌈{log}_{2}\left(k\right)\right⌉ + \left⌈{log}_{2}\left(k-1\right)\right⌉ + x$ bits, où x est un entier et x ≥ 1 ;
l'identification d'une somme d'exposants maximale (eₘₐₓ) parmi k sommes d'exposants (eabᵢ), chaque somme d'exposants étant la somme des exposants du nombre à virgule flottante aᵢ et du nombre à virgule flottante bᵢ ;
l'alignement des bits d'amplitude des nombres (yᵢ' et yᵢ'') sur la base de la somme d'exposants maximale (eₘₐₓ) ; et
l'addition simultanée de l'ensemble de « 2k » nombres.

13. Implémentation matérielle pour la réalisation d'un produit scalaire d'un tableau de « 2k » nombres à virgule flottante, k ≥ 3, le tableau comprenant un premier ensemble de k nombres à virgule flottante a₀, a₁..., aₖ₋₁, et un deuxième ensemble de k nombres à virgule flottante b₀, b₁..., bₖ₋₁, dans laquelle l'implémentation matérielle comprend :
une unité de multiplication comprenant une pluralité de multiplicateurs configurés pour :
recevoir les deux ensembles de « k » nombres à virgule flottante ;
réaliser une multiplication des mantisses de la mantisse de chaque nombre à virgule flottante ai avec la mantisse d'un nombre à virgule flottante bᵢ, chaque multiplication générant un premier nombre produit intermédiaire (zᵢ') et un deuxième nombre produit intermédiaire (zᵢ''), générant ainsi 2k nombres produits comprenant k premiers nombres produits intermédiaires (zᵢ') et k deuxièmes nombres produits intermédiaires (zᵢ''), chacun ayant une longueur binaire de « r+ log (k-1) +2 » bits, dans lequel r est un entier ;
une unité de conversion de format configurée pour :
créer un ensemble de « 2k » nombres comprenant k premiers nombres (yᵢ') et k deuxièmes nombres (yᵢ''), sur la base des 2k nombres de produits, chacun ayant une longueur de bits de « n » bits obtenue en ajoutant des bits de poids fort supplémentaires à la longueur de bits des nombres de produits intermédiaires (zᵢ' et zᵢ'' bits) où les « n » bits comprennent un nombre de bits de grandeur, où « n » est $r + 1 + \left⌈{log}_{2}\left(k\right)\right⌉ + \left⌈{log}_{2}\left(k-1\right)\right⌉ + x$ bits, où x est un entie et x ≥ 1 ;
une unité de détection d'exposant maximal configurée pour identifier une somme d'exposants maximale (eₘₐₓ) parmi k sommes d'exposants (eabᵢ), chaque somme d'exposants étant la somme des exposants du nombre à virgule flottante aᵢ et du nombre à virgule flottante bᵢ ;
une unité d'alignement configurée pour aligner les bits d'amplitude des nombres (yᵢ' et yᵢ") sur la base de la somme d'exposants maximale (eₘₐₓ) ; et
une unité de traitement configurée pour additionner l'ensemble de « 2k » nombres simultanément afin de générer une valeur de sortie.

14. Ensemble de données de définition de circuit intégré qui, lorsqu'il est traité dans un système de fabrication de circuit intégré, configure le système de fabrication de circuit intégré afin de fabriquer une implémentation matérielle selon l'une quelconque des revendications 10 à 11 ou 13.

15. Support de stockage non transitoire lisible par ordinateur sur lequel est stockée une description, lisible par ordinateur, d'une implémentation matérielle selon l'une quelconque des revendications 10 à 11 ou 13 qui, lorsqu'il est traité dans un système de fabrication de circuit intégré, amène le système de fabrication de circuit intégré à fabriquer un circuit intégré intégrant l'implémentation matérielle.
